# EUROPEAN PATENT SPECIFICATION

(11) **EP 4 214 966 B1**
(45) Date of publication and mention of the grant of the patent: **20.05.2026**
(21) Application number: 20953690.3
(22) Date of filing: 18.09.2020
(51) Int. Cl.: H04W 4/029, H04W 52/02, H04M 1/72454, H04W 72/51

(54) **USER EQUIPMENT (UE) CONTEXT SCENARIO INDICATION-BASED CONFIGURATION**
AUF DER ANZEIGE EINES BENUTZERVORRICHTUNGSKONTEXTSZENARIOS BASIERENDE KONFIGURATION
CONFIGURATION BASÉE SUR UNE INDICATION DE SCÉNARIO DE CONTEXTE D'ÉQUIPEMENT UTILISATEUR (UE)

(43) Date of publication of application: 26.07.2023
(73) Proprietor: QUALCOMM INCORPORATED, San Diego, California 92121-1714 (US)
(72) Inventor: REN, Yuwei, San Diego, California 92121-1714 (US); HUANG, Yin, San Diego, California 92121-1714 (US); XU, Hao, San Diego, California 92121-1714 (US); BELETCHI, Andrian, San Diego, California 92121-1714 (US); PATEL, Chirag Sureshbhai, San Diego, California 92121-1714 (US)
(74) Representative: Bardehle Pagenberg Partnerschaft mbB Patentanwälte Rechtsanwälte
(86) International application number: PCT/CN2020/116180
(87) International publication number: WO 2022/056832

(56) References cited:
- WO-A1-2013/180513
- WO-A1-2019/028739
- CN-A- 110 012 528
- US-A1- 2013 132 566
- US-A1- 2016 242 059
- US-A1- 2018 213 446
- US-A1- 2019 387 555

## Description

### TECHNICAL FIELD

This application relates to wireless communication systems and methods, and more particularly to user equipment (UE) context scenario indication-based configurations in a wireless communication network.

### INTRODUCTION

Wireless communications systems are widely deployed to provide various types of communication content such as voice, video, packet data, messaging, broadcast, and so on. These systems may be capable of supporting communication with multiple users by sharing the available system resources (e.g., time, frequency, and power). A wireless multiple-access communications system may include a number of base stations (BSs), each simultaneously supporting communications for multiple communication devices, which may be otherwise known as user equipment (UE).

To meet the growing demands for expanded mobile broadband connectivity, wireless communication technologies are advancing from the long-term evolution (LTE) technology to a next generation new radio (NR) technology, which may be referred to as 5^{th} Generation (5G). For example, NR is designed to provide a lower latency, a higher bandwidth or a higher throughput, and a higher reliability than LTE. NR is designed to operate over a wide array of spectrum bands, for example, from low-frequency bands below about 1 gigahertz (GHz) and mid-frequency bands from about 1 GHz to about 6 GHz, to high-frequency bands such as millimeter wave (mmWave) bands. NR is also designed to operate across different spectrum types, from licensed spectrum to unlicensed and shared spectrum. Spectrum sharing enables operators to opportunistically aggregate spectrums to dynamically support high-bandwidth services. Spectrum sharing can extend the benefit of NR technologies to operating entities that may not have access to a licensed spectrum. As use cases and diverse deployment scenarios continue to expand in wireless communication, employing machine learning (ML) or artificial intelligence (AI) technologies with NR technologies may also yield benefits. US 2018/213446 A1 discloses a communication method using context information of a terminal in a wireless communication system. US 2016/242059 A1 discloses methods for enhancing network operation with UE context awareness.

### BRIEF SUMMARY OF SOME EXAMPLES

The following summarizes some aspects of the present disclosure to provide a basic understanding of the discussed technology. This summary is not an extensive overview of all contemplated features of the disclosure and is intended neither to identify key or critical elements of all aspects of the disclosure nor to delineate the scope of any or all aspects of the disclosure. Its sole purpose is to present some concepts of one or more aspects of the disclosure in summary form as a prelude to the more detailed description that is presented later. The scope of the invention is defined by the amended claims.

For example, in an aspect of the disclosure, a method of wireless communication performed by a user equipment (UE), the method includes obtaining, from one or more sensors, sensor data; identifying, based on the sensor data, a first context scenario associated with a surrounding environment of the UE or a user status; transmitting, to a base station (BS), an indication of the first context scenario; and receiving, from the BS in response to the indication, a first configuration for the first context scenario.

In an additional aspect of the disclosure, a method of wireless communication performed by a base station (BS), the method includes receiving, from a user equipment (UE), an indication of a first context scenario associated with at least one of a surrounding environment of the UE or a user status; and transmitting, to the UE in response to the indication, a first configuration for the first context scenario.

In an additional aspect of the disclosure, a user equipment (UE) includes one or more sensors configured to obtain sensor data; a processor configured to identify, based on the sensor data, a first context scenario associated with a surrounding environment of the UE or a user status; and a transceiver configured to transmit, to a base station (BS), an indication of the first context scenario; and receive, from the BS in response to the indication, a first configuration for the first context scenario.

In an additional aspect of the disclosure, a base station (BS) includes a transceiver configured to receive, from a user equipment (UE), an indication of a first context scenario associated with at least one of a surrounding environment of the UE or a user status; and transmit, to the UE in response to the indication, a first configuration for the first context scenario.

In an additional aspect of the disclosure, a non-transitory computer-readable medium having program code recorded thereon, the program code includes code for causing a user equipment (UE) to obtain sensor data from one or more sensors; code for causing the UE to identify, based on the sensor data, a first context scenario associated with a surrounding environment of the UE or a user status; code for causing the UE to transmit, to a base station (BS), an indication of the first context scenario; and code for causing the UE to receive, from the BS in response to the indication, a first configuration for the first context scenario.

In an additional aspect of the disclosure, a non-transitory computer-readable medium having program code recorded thereon, the program code includes code for causing a base station (BS) to receive, from a user equipment (UE), an indication of a first context scenario associated with at least one of a surrounding environment of the UE or a user status; and code for causing the BS to transmit, to the UE in response to the indication, a first configuration for the first context scenario.

In an additional aspect of the disclosure, a user equipment (UE) includes means for obtaining sensor data from one or more sensors; means for identifying, based on the sensor data, a first context scenario associated with a surrounding environment of the UE or a user status; means for transmitting, to a base station (BS), an indication of the first context scenario; and means for receiving, from the BS in response to the indication, a first configuration for the first context scenario.

In an additional aspect of the disclosure, a base station (BS) includes means for receiving, from a user equipment (UE), an indication of a first context scenario associated with at least one of a surrounding environment of the UE or a user status; and means for transmitting, to the UE in response to the indication, a first configuration for the first context scenario.

Other aspects and features aspect of the present invention will become apparent to those of ordinary skill in the art, upon reviewing the following description of specific, exemplary aspects of the present invention in conjunction with the accompanying figures. While features of the present invention may be discussed relative to certain aspects and figures below, all aspects of the present invention can include one or more of the advantageous features discussed herein. In other words, while one or more aspects may be discussed as having certain advantageous features, one or more of such features may also be used in accordance with the various aspects of the invention discussed herein. In similar fashion, while exemplary aspects may be discussed below as device, system, or method aspects it should be understood that such exemplary aspects can be implemented in various devices, systems, and methods.

### BRIEF DESCRIPTION OF THE DRAWINGS

FIG. 1 illustrates a wireless communication network according to some aspects of the present disclosure.
FIG. 2 is a sequence diagram illustrating a measurement-report-based user equipment (UE) configuration method according to some aspects of the present disclosure
FIG. 3A illustrates a UE context scenario identification scheme according to some aspects of the present disclosure.
FIG. 3B illustrates a UE context scenario identification scheme according to some aspects of the present disclosure.
FIG. 4 is a sequence diagram illustrating a UE context scenario indication-based configuration method according to some aspects of the present disclosure
FIG. 5 is a sequence diagram illustrating a UE context scenario indication-based configuration method according to some aspects of the present disclosure
FIG. 6 illustrates a UE context scenario capability report according to some aspects of the present disclosure
FIG. 7 is a table illustrating UE context scenario set-to-sensor capability mapping according to some aspects of the present disclosure.
FIG. 8 illustrates a context scenario recognition capability level configuration according to some aspects of the present disclosure.
FIG. 9 is a block diagram of an exemplary user equipment (UE) according to some aspects of the present disclosure.
FIG. 10 is a block diagram of an exemplary base station (BS) according to some aspects of the present disclosure.
FIG. 11 is a flow diagram of a communication method according to some aspects of the present disclosure.
FIG. 12 is a flow diagram of a communication method according to some aspects of the present disclosure.

### DETAILED DESCRIPTION

The detailed description set forth below, in connection with the appended drawings, is intended as a description of various configurations and is not intended to represent the only configurations in which the concepts described herein may be practiced. The detailed description includes specific details for the purpose of providing a thorough understanding of the various concepts. However, it will be apparent to those skilled in the art that these concepts may be practiced without these specific details. In some instances, well-known structures and components are shown in block diagram form in order to avoid obscuring such concepts.

This disclosure relates generally to wireless communications systems, also referred to as wireless communications networks. In various aspects, the techniques and apparatus may be used for wireless communication networks such as code division multiple access (CDMA) networks, time division multiple access (TDMA) networks, frequency division multiple access (FDMA) networks, orthogonal FDMA (OFDMA) networks, single-carrier FDMA (SC-FDMA) networks, LTE networks, Global System for Mobile Communications (GSM) networks, 5^{th} Generation (5G) or new radio (NR) networks, as well as other communications networks. As described herein, the terms "networks" and "systems" may be used interchangeably.

An OFDMA network may implement a radio technology such as evolved UTRA (E-UTRA), Institute of Electrical and Electronics Engineers (IEEE) 802.11, IEEE 802.16, IEEE 802.20, flash-OFDM and the like. UTRA, E-UTRA, and GSM are part of universal mobile telecommunication system (UMTS). In particular, long term evolution (LTE) is a release of UMTS that uses E-UTRA. UTRA, E-UTRA, GSM, UMTS and LTE are described in documents provided from an organization named "3rd Generation Partnership Project" (3GPP), and cdma2000 is described in documents from an organization named "3rd Generation Partnership Project 2" (3GPP2). These various radio technologies and standards are known or are being developed. For example, the 3rd Generation Partnership Project (3GPP) is a collaboration between groups of telecommunications associations that aims to define a globally applicable third generation (3G) mobile phone specification. 3GPP long term evolution (LTE) is a 3GPP project which was aimed at improving the UMTS mobile phone standard. The 3GPP may define specifications for the next generation of mobile networks, mobile systems, and mobile devices. The present disclosure is concerned with the evolution of wireless technologies from LTE, 4G, 5G, NR, and beyond with shared access to wireless spectrum between networks using a collection of new and different radio access technologies or radio air interfaces.

In particular, 5G networks contemplate diverse deployments, diverse spectrum, and diverse services and devices that may be implemented using an OFDM-based unified, air interface. In order to achieve these goals, further enhancements to LTE and LTE-A are considered in addition to development of the new radio technology for 5G NR networks. The 5G NR will be capable of scaling to provide coverage (1) to a massive Internet of things (IoTs) with a ultra-high density (e.g., ~1M nodes/km²), ultra-low complexity (e.g., ~10s of bits/sec), ultra-low energy (e.g., ~10+ years of battery life), and deep coverage with the capability to reach challenging locations; (2) including mission-critical control with strong security to safeguard sensitive personal, financial, or classified information, ultra-high reliability (e.g., ~99.9999% reliability), ultra-low latency (e.g., ~ 1 ms), and users with wide ranges of mobility or lack thereof; and (3) with enhanced mobile broadband including extreme high capacity (e.g., ~ 10 Tbps/km²), extreme data rates (e.g., multi-Gbps rate, 100+ Mbps user experienced rates), and deep awareness with advanced discovery and optimizations.

The 5G NR may be implemented to use optimized OFDM-based waveforms with scalable numerology and transmission time interval (TTI); having a common, flexible framework to efficiently multiplex services and features with a dynamic, low-latency time division duplex (TDD)/frequency division duplex (FDD) design; and with advanced wireless technologies, such as massive multiple input, multiple output (MIMO), robust millimeter wave (mmWave) transmissions, advanced channel coding, and device-centric mobility. Scalability of the numerology in 5G NR, with scaling of subcarrier spacing, may efficiently address operating diverse services across diverse spectrum and diverse deployments. For example, in various outdoor and macro coverage deployments of less than 3GHz FDD/TDD implementations, subcarrier spacing may occur with 15 kHz, for example over 5, 10, 20 MHz, and the like bandwidth (BW). For other various outdoor and small cell coverage deployments of TDD greater than 3 GHz, subcarrier spacing may occur with 30 kHz over 80/100 MHz BW. For other various indoor wideband implementations, using a TDD over the unlicensed portion of the 5 GHz band, the subcarrier spacing may occur with 60 kHz over a 160 MHz BW. Finally, for various deployments transmitting with mmWave components at a TDD of 28 GHz, subcarrier spacing may occur with 120 kHz over a 500 MHz BW.

The scalable numerology of the 5G NR facilitates scalable TTI for diverse latency and quality of service (QoS) requirements. For example, shorter TTI may be used for low latency and high reliability, while longer TTI may be used for higher spectral efficiency. The efficient multiplexing of long and short TTIs to allow transmissions to start on symbol boundaries. 5G NR also contemplates a self-contained integrated subframe design with UL/downlink scheduling information, data, and acknowledgement in the same subframe. The self-contained integrated subframe supports communications in unlicensed or contention-based shared spectrum, adaptive UL/downlink that may be flexibly configured on a per-cell basis to dynamically switch between UL and downlink to meet the current traffic needs.

Various other aspects and features of the disclosure are further described below. It should be apparent that the teachings herein may be embodied in a wide variety of forms and that any specific structure, function, or both being disclosed herein is merely representative and not limiting. Based on the teachings herein one of an ordinary level of skill in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. For example, a method may be implemented as part of a system, device, apparatus, and/or as instructions stored on a computer readable medium for execution on a processor or computer. Furthermore, an aspect may comprise at least one element of a claim.

A user equipment (UE) may be equipped with a wide variety of sensors, such as a global positioning system (GPS), a microphone, a camera, an accelerometer, a gyroscope, a magnetometer, a biometric sensor, etc. Each of the sensors may provide certain sensor information related to the UE. For instance, the GPS may provide geographical location information associated with the UE or the user. The microphone may provide audio/sound related information in the surrounding environment. The camera can capture images of the surrounding environment. The accelerometer can capture a variation in a traveling speed associated with the UE. The gyroscope can provide orientation information associated with the UE. The magnetometer may provide directional information associated with the UE in a physical space. The biometric sensor can log vital signals associated with the user.

In some situations, it may be describable for a BS to configure a UE based on a context scenario of the UE. A context scenario may refer to a surrounding environment (e.g., a user location) of the UE and/or a status (e.g., activities and/or vital signs) associated with a user of the UE. While a UE may be able to obtain various sensor data information surrounding the UE and/or a user of the UE, data captured by an individual sensor alone may not be able to directly indicate a context scenario associated with the UE. However, different context scenarios may exhibit different features in the captured sensor data. For instance, in a simple case where a UE includes a GPS, an accelerometer, and a gyroscope, when the GPS indicates a fixed location, the accelerometer indicates an about zero acceleration, and the gyroscope indicates a fixed orientation, and the time is 3:00 am, the UE may determine that the user is asleep. For other complicated cases, it may be difficult to apply simple rules to derive a context scenario from various sensor data.

The present disclosure describes mechanisms for a UE to indicate a context scenario of the UE in real-time, and for a BS to configure the UE according to the UE's context scenario. For example, a UE equipped with multiple sensors (e.g., a GPS, a microphone, a camera, an accelerometer, a gyroscope, a magnetometer, a biometric sensor, etc.) may obtain sensor data from the sensors. The UE may identify a context scenario associated the UE (e.g., at a current time) and indicate the context scenario to a BS in real-time. The context scenario may be associated with a surrounding of the UE and/or a status associated with a user of the UE. The UE may identify the context scenario from a set of context scenarios. Upon receiving the context scenario indication from the UE, the BS may determine a configuration for the UE that is optimized for the particular context scenario indicated by the UE. The configuration may be optimized for resource utilization at the UE, power consumption at the UE, system performance at the UE, and/or user experiences.

In some aspects, the UE may utilize sensor fusion techniques and/or machine learning-based techniques to identify the context scenario from features provided by the sensor data. Sensor fusion techniques may refer to combining inputs from various sensors to form a single model about a surrounding environment of the UE or about a user of the UE. Sensor fusion techniques can balance and utilize features provided by sensor data obtained from different sensors to predict or derive a context scenario associated with the UE. Machine learning-based techniques can be used to train the sensor fusion model to predict or derive a context scenario given a set of sensor data (obtained from different sensors). In some aspects, the UE may include an artificial intelligence (AI) engine that implements a machine learning-based network. The machine learning-based network may be a deep learning network. The deep learning network may be implemented using convolutional encoding/decoding techniques/algorithms, time sequence prediction techniques/algorithms, and/or any standard deep learning-based algorithms.

In some aspects, the configuration may include scheduling information, reference signal resource configuration, a channel scan operation, an operational mode switch, or an initiation of an application. As an example, the BS may determine whether to schedule the UE more often or less often based on the context scenario. The BS may determine a time and/or frequency density for reference signal resources (e.g., demodulation reference signal (DMRS) resources) based on a transportation mode (e.g., car, bus, high-speed train, etc.) indicated by the context scenario. In another example, the BS may configure the UE to scan for various channels or prepare for a handover based on movements and/or a location (e.g., moving between indoor/outdoor) indicated by the context scenario. In yet another example, the BS may configure the UE to switch to a certain mode based on a location or activity of the user. For instance, the BS may configure the UE to switch to an airplane mode (e.g., disable/terminate a cellular voice and data connection) when the context scenario indicates the user is on a plane without having the UE to manually switch to the airplane mode. In a further example, the BS may configure the UE to initiate or launch a certain application based on a location and/or an activity of the UE. For instance, the BS may configure the UE to start a navigation application and provide driving instructions when the context scenario indicates the user is driving a car.

In some aspects, the UE may report its context scenario recognition or identification capability to the BS. For instance, the UE may transmit a report to the BS indicating whether the UE supports context scenario recognition and a context scenario recognition capability level of the UE. The context scenario recognition capability level may be associated with a sensor capability level (e.g., the range of sensors available at the UE) and/or a machine learning capability (e.g., AI engine capability) at the UE. The machine learning capability may be dependent on the specific machine learning algorithms implemented by the UE and/or the computational/processing power available at the UE. The BS may select one or more sets of context scenarios based the UE's context scenario recognition capability. The BS may configure the UE with the one or more sets of context scenarios, and the UE may identify a context scenario from among the one or more configure sets of context scenarios (based on acquired sensor data at a current time). As the context scenario at the UE may vary over time, the UE may report a new context scenario (a current context scenario) to the BS, and the BS may switch the UE to a different configuration based on the new context scenario.

Aspects of the present disclosure can provide several benefits. For example, applying machine learning-based techniques to sensor data (obtained locally at the UE) can allow the UE to efficiently (in real-time) and accurately identify a context scenario associated with the UE from the sensor data. Indicating the context scenario to a BS may enable the BS to determine a configuration (e.g., resources and/or schedules) that is optimized for the specific context scenario. Indicating the context scenario in real-time can allow for more resource optimization. Additionally, configuring the UE to automatically switch to a certain operational mode or initiate a certain application can reducing manual actions by a user, which may in turn reduces power consumption at the UE. Further, by having the UE to identify and indicate a context scenario instead of relying on measurements by the UE or a network, resources and/or signaling overhead related to measurements can be reduced and the response time in switching a UE to a most up-to-date or optimized configuration can also be reduced.

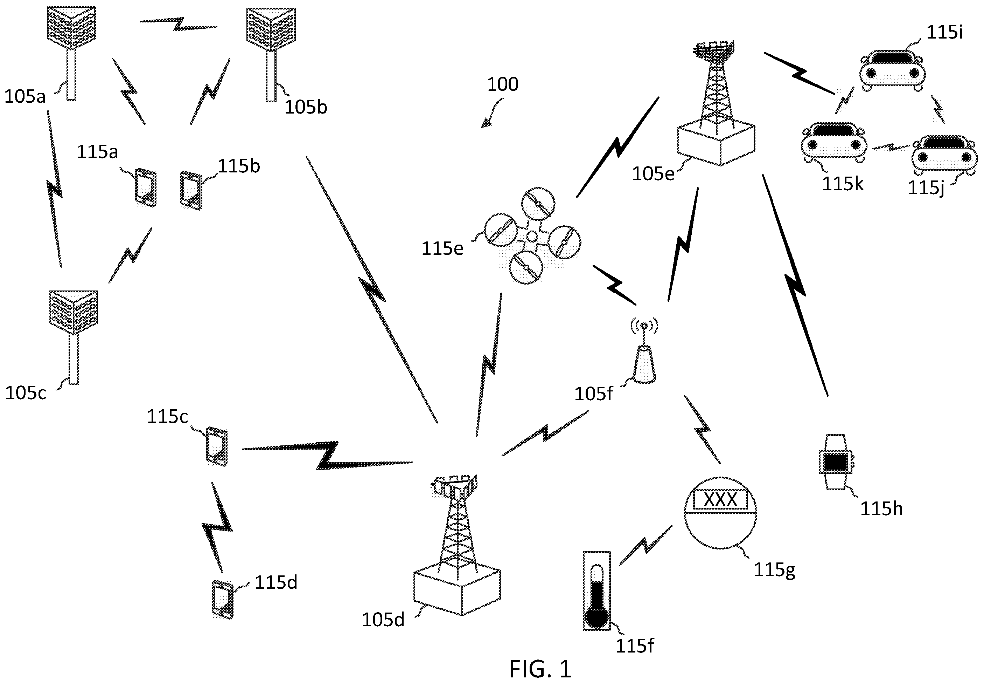

FIG. 1 illustrates a wireless communication network 100 according to some aspects of the present disclosure. The network 100 may be a 5G network. The network 100 includes a number of base stations (BSs) 105 (individually labeled as 105a, 105b, 105c, 105d, 105e, and 105f) and other network entities. A BS 105 may be a station that communicates with UEs 115 and may also be referred to as an evolved node B (eNB), a next generation eNB (gNB), an access point, and the like. Each BS 105 may provide communication coverage for a particular geographic area. In 3GPP, the term "cell" can refer to this particular geographic coverage area of a BS 105 and/or a BS subsystem serving the coverage area, depending on the context in which the term is used.

A BS 105 may provide communication coverage for a macro cell or a small cell, such as a pico cell or a femto cell, and/or other types of cell. A macro cell generally covers a relatively large geographic area (e.g., several kilometers in radius) and may allow unrestricted access by UEs with service subscriptions with the network provider. A small cell, such as a pico cell, would generally cover a relatively smaller geographic area and may allow unrestricted access by UEs with service subscriptions with the network provider. A small cell, such as a femto cell, would also generally cover a relatively small geographic area (e.g., a home) and, in addition to unrestricted access, may also provide restricted access by UEs having an association with the femto cell (e.g., UEs in a closed subscriber group (CSG), UEs for users in the home, and the like). A BS for a macro cell may be referred to as a macro BS. A BS for a small cell may be referred to as a small cell BS, a pico BS, a femto BS or a home BS. In the example shown in FIG. 1, the BSs 105d and 105e may be regular macro BSs, while the BSs 105a-105c may be macro BSs enabled with one of three dimension (3D), full dimension (FD), or massive MIMO. The BSs 105a-105c may take advantage of their higher dimension MIMO capabilities to exploit 3D beamforming in both elevation and azimuth beamforming to increase coverage and capacity. The BS 105f may be a small cell BS which may be a home node or portable access point. A BS 105 may support one or multiple (e.g., two, three, four, and the like) cells.

The network 100 may support synchronous or asynchronous operation. For synchronous operation, the BSs may have similar frame timing, and transmissions from different BSs may be approximately aligned in time. For asynchronous operation, the BSs may have different frame timing, and transmissions from different BSs may not be aligned in time.

The UEs 115 are dispersed throughout the wireless network 100, and each UE 115 may be stationary or mobile. A UE 115 may also be referred to as a terminal, a mobile station, a subscriber unit, a station, or the like. A UE 115 may be a cellular phone, a personal digital assistant (PDA), a wireless modem, a wireless communication device, a handheld device, a tablet computer, a laptop computer, a cordless phone, a wireless local loop (WLL) station, or the like. In one aspect, a UE 115 may be a device that includes a Universal Integrated Circuit Card (UICC). In another aspect, a UE may be a device that does not include a UICC. In some aspects, the UEs 115 that do not include UICCs may also be referred to as IoT devices or internet of everything (IoE) devices. The UEs 115a-115d are examples of mobile smart phone-type devices accessing network 100. A UE 115 may also be a machine specifically configured for connected communication, including machine type communication (MTC), enhanced MTC (eMTC), narrowband IoT (NB-IoT) and the like. The UEs 115e-115h are examples of various machines configured for communication that access the network 100. The UEs 115i-115k are examples of vehicles equipped with wireless communication devices configured for communication that access the network 100. A UE 115 may be able to communicate with any type of the BSs, whether macro BS, small cell, or the like. In FIG. 1, a lightning bolt (e.g., communication links) indicates wireless transmissions between a UE 115 and a serving BS 105, which is a BS designated to serve the UE 115 on the downlink (DL) and/or uplink (UL), desired transmission between BSs 105, backhaul transmissions between BSs, or sidelink transmissions between UEs 115.

In operation, the BSs 105a-105c may serve the UEs 115a and 115b using 3D beamforming and coordinated spatial techniques, such as coordinated multipoint (CoMP) or multi-connectivity. The macro BS 105d may perform backhaul communications with the BSs 105a-105c, as well as small cell, the BS 105f. The macro BS 105d may also transmits multicast services which are subscribed to and received by the UEs 115c and 115d. Such multicast services may include mobile television or stream video, or may include other services for providing community information, such as weather emergencies or alerts, such as Amber alerts or gray alerts.

The BSs 105 may also communicate with a core network. The core network may provide user authentication, access authorization, tracking, Internet Protocol (IP) connectivity, and other access, routing, or mobility functions. At least some of the BSs 105 (e.g., which may be an example of a gNB or an access node controller (ANC)) may interface with the core network through backhaul links (e.g., NG-C, NG-U, etc.) and may perform radio configuration and scheduling for communication with the UEs 115. In various examples, the BSs 105 may communicate, either directly or indirectly (e.g., through core network), with each other over backhaul links (e.g., X1, X2, etc.), which may be wired or wireless communication links.

The network 100 may also support mission critical communications with ultra-reliable and redundant links for mission critical devices, such as the UE 115e, which may be a drone. Redundant communication links with the UE 115e may include links from the macro BSs 105d and 105e, as well as links from the small cell BS 105f. Other machine type devices, such as the UE 115f (e.g., a thermometer), the UE 115g (e.g., smart meter), and UE 115h (e.g., wearable device) may communicate through the network 100 either directly with BSs, such as the small cell BS 105f, and the macro BS 105e, or in multi-step-size configurations by communicating with another user device which relays its information to the network, such as the UE 115f communicating temperature measurement information to the smart meter, the UE 115g, which is then reported to the network through the small cell BS 105f. The network 100 may also provide additional network efficiency through dynamic, low-latency TDD/FDD communications, such asV2V, V2X, C-V2X communications between a UE 115i, 115j, or 115k and other UEs 115, and/or vehicle-to-infrastructure (V2I) communications between a UE 115i, 115j, or 115k and a BS 105.

In some implementations, the network 100 utilizes OFDM-based waveforms for communications. An OFDM-based system may partition the system BW into multiple (K) orthogonal subcarriers, which are also commonly referred to as subcarriers, tones, bins, or the like. Each subcarrier may be modulated with data. In some instances, the subcarrier spacing between adjacent subcarriers may be fixed, and the total number of subcarriers (K) may be dependent on the system BW. The system BW may also be partitioned into subbands. In other instances, the subcarrier spacing and/or the duration of TTIs may be scalable.

In some aspects, the BSs 105 can assign or schedule transmission resources (e.g., in the form of time-frequency resource blocks (RB)) for downlink (DL) and uplink (UL) transmissions in the network 100. DL refers to the transmission direction from a BS 105 to a UE 115, whereas UL refers to the transmission direction from a UE 115 to a BS 105. The communication can be in the form of radio frames. A radio frame may be divided into a plurality of subframes or slots, for example, about 10. Each slot may be further divided into mini-slots. In a FDD mode, simultaneous UL and DL transmissions may occur in different frequency bands. For example, each subframe includes a UL subframe in a UL frequency band and a DL subframe in a DL frequency band. In a TDD mode, UL and DL transmissions occur at different time periods using the same frequency band. For example, a subset of the subframes (e.g., DL subframes) in a radio frame may be used for DL transmissions and another subset of the subframes (e.g., UL subframes) in the radio frame may be used for UL transmissions.

The DL subframes and the UL subframes can be further divided into several regions. For example, each DL or UL subframe may have pre-defined regions for transmissions of reference signals, control information, and data. Reference signals are predetermined signals that facilitate the communications between the BSs 105 and the UEs 115. For example, a reference signal can have a particular pilot pattern or structure, where pilot tones may span across an operational BW or frequency band, each positioned at a pre-defined time and a pre-defined frequency. For example, a BS 105 may transmit cell specific reference signals (CRSs) and/or channel state information - reference signals (CSI-RSs) to enable a UE 115 to estimate a DL channel. Similarly, a UE 115 may transmit sounding reference signals (SRSs) to enable a BS 105 to estimate a UL channel. Control information may include resource assignments and protocol controls. Data may include protocol data and/or operational data. In some aspects, the BSs 105 and the UEs 115 may communicate using self-contained subframes. A self-contained subframe may include a portion for DL communication and a portion for UL communication. A self-contained subframe can be DL-centric or UL-centric. A DL-centric subframe may include a longer duration for DL communication than for UL communication. A UL-centric subframe may include a longer duration for UL communication than for UL communication.

In some aspects, the network 100 may be an NR network deployed over a licensed spectrum. The BSs 105 can transmit synchronization signals (e.g., including a primary synchronization signal (PSS) and a secondary synchronization signal (SSS)) in the network 100 to facilitate synchronization. The BSs 105 can broadcast system information associated with the network 100 (e.g., including a master information block (MIB), remaining system information (RMSI), and other system information (OSI)) to facilitate initial network access. In some instances, the BSs 105 may broadcast the PSS, the SSS, and/or the MIB in the form of synchronization signal block (SSBs) over a physical broadcast channel (PBCH) and may broadcast the RMSI and/or the OSI over a physical downlink shared channel (PDSCH).

In some aspects, a UE 115 attempting to access the network 100 may perform an initial cell search by detecting a PSS from a BS 105. The PSS may enable synchronization of period timing and may indicate a physical layer identity value. The UE 115 may then receive a SSS. The SSS may enable radio frame synchronization, and may provide a cell identity value, which may be combined with the physical layer identity value to identify the cell. The PSS and the SSS may be located in a central portion of a carrier or any suitable frequencies within the carrier.

After receiving the PSS and SSS, the UE 115 may receive a MIB. The MIB may include system information for initial network access and scheduling information for RMSI and/or OSI. After decoding the MIB, the UE 115 may receive RMSI and/or OSI. The RMSI and/or OSI may include radio resource control (RRC) information related to random access channel (RACH) procedures, paging, control resource set (CORESET) for physical downlink control channel (PDCCH) monitoring, physical UL control channel (PUCCH), physical UL shared channel (PUSCH), power control, and SRS.

After obtaining the MIB, the RMSI and/or the OSI, the UE 115 can perform a random access procedure to establish a connection with the BS 105. In some examples, the random access procedure may be a four-step random access procedure. For example, the UE 115 may transmit a random access preamble and the BS 105 may respond with a random access response. The random access response (RAR) may include a detected random access preamble identifier (ID) corresponding to the random access preamble, timing advance (TA) information, a UL grant, a temporary cell-radio network temporary identifier (C-RNTI), and/or a back-off indicator. Upon receiving the random access response, the UE 115 may transmit a connection request to the BS 105 and the BS 105 may respond with a connection response. The connection response may indicate a contention resolution. In some examples, the random access preamble, the RAR, the connection request, and the connection response can be referred to as message 1 (MSG1), message 2 (MSG2), message 3 (MSG3), and message 4 (MSG4), respectively. In some examples, the random access procedure may be a two-step random access procedure, where the UE 115 may transmit a random access preamble and a connection request in a single transmission and the BS 105 may respond by transmitting a random access response and a connection response in a single transmission.

After establishing a connection, the UE 115 and the BS 105 can enter a normal operation stage, where operational data may be exchanged. For example, the BS 105 may schedule the UE 115 for UL and/or DL communications. The BS 105 may transmit UL and/or DL scheduling grants to the UE 115 via a PDCCH. The scheduling grants may be transmitted in the form of DL control information (DCI). The BS 105 may transmit a DL communication signal (e.g., carrying data) to the UE 115 via a PDSCH according to a DL scheduling grant. The UE 115 may transmit a UL communication signal to the BS 105 via a PUSCH and/or PUCCH according to a UL scheduling grant.

In some aspects, the BS 105 may communicate with a UE 115 using HARQ techniques to improve communication reliability, for example, to provide a URLLC service. The BS 105 may schedule a UE 115 for a PDSCH communication by transmitting a DL grant in a PDCCH. The BS 105 may transmit a DL data packet to the UE 115 according to the schedule in the PDSCH. The DL data packet may be transmitted in the form of a transport block (TB). If the UE 115 receives the DL data packet successfully, the UE 115 may transmit a HARQ ACK to the BS 105. Conversely, if the UE 115 fails to receive the DL transmission successfully, the UE 115 may transmit a HARQ NACK to the BS 105. Upon receiving a HARQ NACK from the UE 115, the BS 105 may retransmit the DL data packet to the UE 115. The retransmission may include the same coded version of DL data as the initial transmission. Alternatively, the retransmission may include a different coded version of the DL data than the initial transmission. The UE 115 may apply soft-combining to combine the encoded data received from the initial transmission and the retransmission for decoding. The BS 105 and the UE 115 may also apply HARQ for UL communications using substantially similar mechanisms as the DL HARQ.

In some aspects, the network 100 may operate over a system BW or a component carrier (CC) BW. The network 100 may partition the system BW into multiple BWPs (e.g., portions). A BS 105 may dynamically assign a UE 115 to operate over a certain BWP (e.g., a certain portion of the system BW). The assigned BWP may be referred to as the active BWP. The UE 115 may monitor the active BWP for signaling information from the BS 105. The BS 105 may schedule the UE 115 for UL or DL communications in the active BWP. In some aspects, a BS 105 may assign a pair of BWPs within the CC to a UE 115 for UL and DL communications. For example, the BWP pair may include one BWP for UL communications and one BWP for DL communications.

In some aspects, the network 100 may operate over a shared channel, which may include shared frequency bands and/or unlicensed frequency bands. For example, the network 100 may be an NR-U network operating over an unlicensed frequency band. In such an aspect, the BSs 105 and the UEs 115 may be operated by multiple network operating entities. To avoid collisions, the BSs 105 and the UEs 115 may employ a listen-before-talk (LBT) procedure to monitor for transmission opportunities (TXOPs) in the shared channel. A TXOP may also be referred to as channel occupancy time (COT). For example, a transmitting node (e.g., a BS 105 or a UE 115) may perform an LBT prior to transmitting in the channel. When the LBT passes, the transmitting node may proceed with the transmission. When the LBT fails, the transmitting node may refrain from transmitting in the channel.

An LBT can be based on energy detection (ED) or signal detection. For an energy detection-based LBT, the LBT results in a pass when signal energy measured from the channel is below a threshold. Conversely, the LBT results in a failure when signal energy measured from the channel exceeds the threshold. An LBT may include one, two, or more clear channel assessments (CCAs) performed during successive time periods. For a signal detection-based LBT, the LBT results in a pass when a channel reservation signal (e.g., a predetermined preamble signal) is not detected in the channel. Additionally, an LBT may be in a variety of modes. An LBT mode may be, for example, a category 4 (CAT4) LBT, a category 2 (CAT2) LBT, or a category 1 (CAT1) LBT. A CAT1 LBT is referred to a no LBT mode, where no LBT is to be performed prior to a transmission. A CAT2 LBT refers to an LBT without a random back-off period. For instance, a transmitting node may determine a channel measurement in a time interval and determine whether the channel is available or not based on a comparison of the channel measurement against a ED threshold. A CAT4 LBT refers to an LBT with a random back-off and a variable contention window (CW). For instance, a transmitting node may draw a random number and back-off for a duration based on the drawn random number in a certain time unit.

In some aspects, the network 100 may configure a UE 115 with different configurations for different operational modes or different operational environments. For instance, when the UE 115 is in an inactive mode, idle mode, or sleep mode, the network 100 may schedule the UE 115 for communications less often so that power consumption at the UE 115 may be reduced. In another example, when the network 100 detected that the UE 115 is operating in a high-doppler mode (e.g., travelling at a high speed), the network 100 may configure the UE 115 with high-density reference signals (e.g., demodulation reference signals (DMRSs)) to improve channel estimation performance. For instance, the reference signal may include a set of predetermined pilot symbols distributed in frequency and/or time. The UE 115 may receive the reference signal and determine a channel response (for a channel between the UE 115 and the BS 105) from the received reference signal. When operating in a high-doppler mode, the channel may vary rapidly in time. Accordingly, increasing the time density of the pilot symbols, the UE 115 may be able to determine a more accurate channel estimate. In general, the network 100 may configure the UE 115 with a certain configuration (e.g., resource configurations and/or scheduling) optimized for a specific operational environment, condition, and/or mode. In some aspects, the network 100 may determine the operational environment, condition, and/or mode based on measurement performed by the network 100 and/or measurements reported by the UE 115.

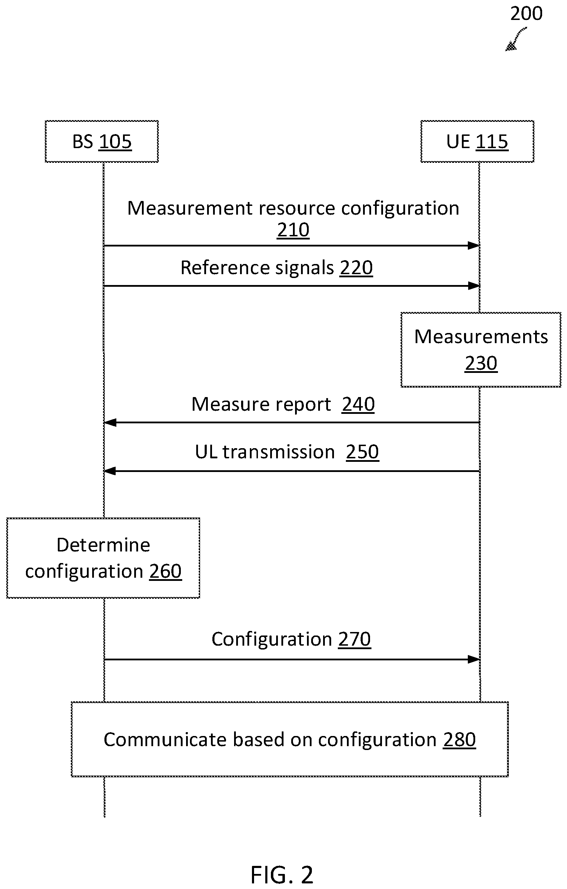

FIG. 2 is a sequence diagram illustrating a measurement-report-based UE configuration method 200 according to some aspects of the present disclosure. The method 200 may be implemented between a UE 115 and a BS 105 in the network 100. As illustrated, the method 200 includes a number of enumerated actions, but aspects of the method 200 may include additional actions before, after, and in between the enumerated actions. In some aspects, one or more of the enumerated actions may be omitted or performed in a different order.

At action 210, the BS 105 transmits a measurement resource configuration to the UE 115, for example, via an RRC configuration. The measurement resource configuration may indicate resources (e.g., time-frequency resources) where the BS 105 may transmit reference signals (e.g., channel state information-reference signals (CSI-RSs)) for the UE 115 to perform measurements. The reference signals may have a predetermined waveform. In some instances, the reference signals may include pilot symbols distributed in time and/or frequency as discussed above.

At action 220, after configuring the measurement resources, the BS 105 may transmit reference signals in the configured resources.

At action 230, the UE 115 performs signal measurements according to the measurement resource configuration received from the BS 105. For instance, the UE 115 may receive the reference signals from the measurement resources and may determine signal measurement(s) from the received reference signals. The signal measurements may include receive signal strength indicator (RSSI), channel state information (CSI), channel quality indicator (CQI), reference signal received power (RSRP), reference signal received equality (RSRQ), a signal-to-noise-ratio (SNR), a signal-to-interference-plus-noise-ratio (SINR), and/or any suitable type of signal measurements.

At action 240, the UE 115 transmits measurement report(s) to the BS 105. The measurement report(s) may indicate the signal measurements determined from the reference signals received from the BS 105.

At action 250, the UE 115 may also transmit UL transmission(s) (e.g., PUSCH signals, PUCCH signals, sounding reference signals (SRSs)) to the BS 105. For instance, the BS 105 may schedule the UE 115 with UL scheduling grants for the UL transmissions. Additionally or alternatively, the BS 015 may configure the UE 115 with configured grants or a semi-persistent schedule (SPS) for the UL transmissions. The BS 105 may receive the UL transmissions and may also determine signal measurements for the UL transmissions. The signal measurements may be similar the UE 115 measurements performed at action 230.

At action 260, the BS 105 determines a configuration for communicating with the UE 115. The BS 105 may optimize the configuration based on the measurement reports received from the UE 115 and/or the measurements obtained from the UL transmissions. In some instances, the BS 105 determine a schedule (e.g., resources, transmission parameters such as a modulation coding scheme (MCS) and/or a power control configuration) for communicating with the UE 115 according to the measurement reports and/or UL transmission measurements. In some instances, the BS 105 may determine a channel condition from the UL transmissions and may configure reference signal resources based on the channel condition. For instance, the BS 105 may estimate a doppler speed from the UL transmissions and may determine a time density for a reference signal based on the doppler speed. Additionally or alternatively, the BS 105 may estimate a channel delay spread from the UL transmissions and may determine a frequency density for a reference signal based on the channel delay spread. In general, the BS 105 may determine an operating condition, mode, and/or environment of the UE 115 and may select a most suitable or optimized configuration (e.g., scheduling and/or resources) for the UE 115 based on the determined operating condition, mode, and/or environment of the UE 115.

At action 270, the BS 105 transmits the determined configuration to the UE 115.

At action 280, the BS 105 and the UE 115 may communicate UL transmissions and/or DL transmissions with each other according to the configuration.

While the BS 105 can optimize a configuration for communicating with the UE 115 based on measurement reports received from the UE 115 and/or measurements performed by the BS 105, there are several disadvantages with such measurement-report-based optimizations. Firstly, the process of obtaining measurements may take time as can be seen from the method 200 (e.g., from actions 210 to 270). As such, performance loss may occur at certain time durations, for example, before the BS 105 obtains updated measurements and update the configuration. Secondly, measurements may not be accurate and/or stable, and errors in the measurements can also lead to a performance loss and/or an increase in resource cost (e.g., errors can lead to retransmissions which may in turn utilize more resources). Thirdly, measurements may provide limited features, and may not be able to provide contextual information about the operating environment of the UE 115. As such, the use of the measurements for configuration optimization may be limited.

In some aspects, a UE 115 may be equipped with various sensors, such as a global positioning system (GPS), a microphone, a camera, an accelerometer, a gyroscope, a magnetometer, a biometric sensor, etc., providing various types of sensor data or sensor information. The various sensor data and/or sensor information can potentially provide context awareness at the UE 115. However, sensor data from an individual sensor alone may not be sufficient in determining a context scenario (e.g., a surrounding environment or a user status) of the UE 115.

Accordingly, the present disclosure provides techniques for a UE to identify a context scenario from sensor data obtained from various sensors, for example, using sensor fusion techniques and/or machine learning-based techniques, and indicate the context scenario to a BS or network in real-time. In response, the BS or network can determine an optimized configuration for the UE 115 based on the context scenario.

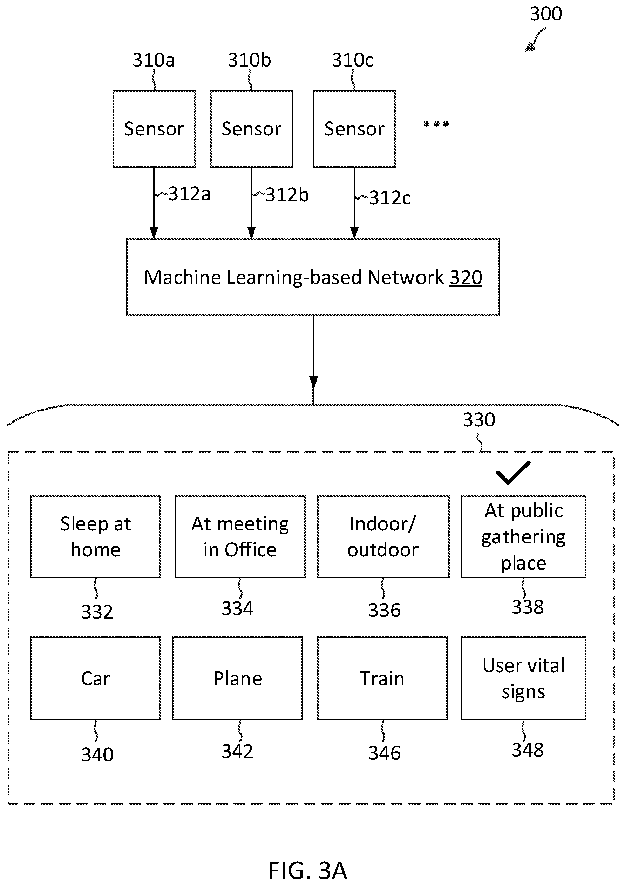

FIG. 3A illustrates a UE context scenario identification scheme 300 according to some aspects of the present disclosure. The scheme 300 may be employed by a UE such as the UEs 115 in a network such as the network. In particular, the UE may identify a context scenario associated with the UE as shown in the scheme 300.

In the scheme 300, the UE 115 may be equipped with various sensors 310 (shown as 310a, 310b, 310c, ...). Each of the sensors 310 may provide certain sensor information or data 312 related to a surrounding environment of the UE 115 and/or a user of the UE 115. As shown, the sensor 310a may generate sensor data 312a, the sensor 310a may generate sensor data 312b, and the sensor 310c may generate sensor data 312c, and so on.

In some aspects, the sensors 310 may include, but are not limited to, a GPS, a microphone, a camera, an accelerometer, a gyroscope, a magnetometer, a biometric sensor, and/or any other types of sensors. The different types of sensors 310 may provide different types of information. For instance, a sensor 310 including a GPS may provide sensor data 312 including geographical location information associated with the UE 115 or the user. A sensor 310 including a microphone may provide sensor data 312 including audio/sound related information in the surrounding environment. A sensor 310 including a camera can capture sensor data 312 including images of a surrounding environment of the UE 115. A sensor 310 including an accelerometer can capture sensor data 312 including a variation in a traveling speed (e.g., an acceleration) associated with the UE 115. A sensor 310 including a gyroscope can provide sensor data 312 including orientation information associated with the UE 115. A sensor 310 including a magnetometer may provide sensor data 312 including directional information associated with the UE 115 in a physical space. A sensor 310 including a biometric sensor can provide sensor data 312 including vital signals associated with the user.

The sensor data 312 obtained from the various sensors 310 may serve as inputs to a machine learning-based network 320. The machine learning-based network 320 may include hardware and/or software configured to identify a context scenario 330 based on the input sensor data 312. The machine learning-based network 320 can implement a variety of algorithms, such as deep learning-based algorithms, convolutional neural networks, time series forecast or prediction algorithms, and/or any suitable machine learning algorithms.

In some aspects, given a set of input sensor data 312 (e.g., 312a, 312b, 312c, ...), the machine learning-based network 320 may be trained to identify a context scenario from a set of context scenarios 330. The set of context scenarios 330 may be associated with at least one of a user location (e.g., home, office, vehicle, indoor/outdoor, coffee shop, mall, etc.), a user activity (e.g., sleep, meeting, exercise, etc.), or a user health status. In some aspects, the set of context scenarios 330 may indicate a scenario 332 where the user is sleeping at home, a scenario 334 where the user is at a meeting in the office, a scenario 336 where the user is at a transit path between indoor and outdoor (e.g., moving from indoor to outdoor or moving from outdoor to indoor), a scenario 338 where the user is at a public gathering place (e.g., a coffee shop or a shopping mall), a scenario 340 where the user is travelling in a car, a scenario 342 where the user is travelling in a plane, a scenario 344 where the user is travelling in a train, a scenario 348 associated with vital signs of the user, and/or any other suitable context scenarios. It is to be understood that the context scenarios 332-348 are for illustrative purposes, and not for limitation purposes. In general, the machine learning-based network 320 can be trained to identify any suitable UE context scenarios.

In the illustrated example of FIG. 3A, the machine learning-based network 320 identifies the context scenario 338 (shown by the checkmark) based on the set of input sensor data 312. The UE 115 may indicate the identified context scenario 338 to a BS 105, and in response, the BS 105 may determine a most suitable or efficient configuration for the UE 115 to operate under the identified context scenario 338 as will be discussed more fully below.

In some aspects, the machine learning-based network 320 may include a convolutional network. In this regard, a convolutional network may include a set of convolutional layers. Each convolutional layer may include a set of filters configured to extract features from a set of sensor data 312 (e.g., 312a, 312b, 312c, ...). In some instances, the convolutional network may also include a set of fully connected layers following the set of convolutional layers. In some instances, the fully connected layers may be non-linear and may gradually shrink the high-dimensional output to a dimension (e.g., a number of context scenarios in the set of context scenarios 330) of the prediction result. For instance, for a given set of input sensor data 312, the machine learning-based network 320 may output a predicted likelihood (e.g., a prediction score) for each context scenario 332, 334, 336, 338, 340, 342, 344, 346, and 348. The machine learning-based network 320 may identify the context scenario (e.g., the scenario 338) with the highest likelihood from among the set of context scenarios 330 to be the output context scenario 322.

In some aspects, the convolutional network may be trained offline. For instance, a training data set with multiple sets of sensor data (e.g., sensor data 312) each annotated with a corresponding context scenario (e.g., a ground truth) may be generated. For instance, a first set of sensor data obtained from various sensors may correspond to a first context scenario, a second set of sensor data obtained from various sensors may correspond to a second context scenario, a third set of sensor data obtained from various sensors may correspond to a third context scenario, and so on. The convolutional network may be applied to each set of sensor data of the training data set, for example, using forward propagation, to obtain an output (e.g., a predicted context scenario) for the set of sensor data. The coefficients (or weights) in the convolutional layers and/or the fully connected layers may be adjusted, for example, using backward propagation, to minimize an error between the output (the predicted context scenario) and the ground truth for the respective set of sensor data.

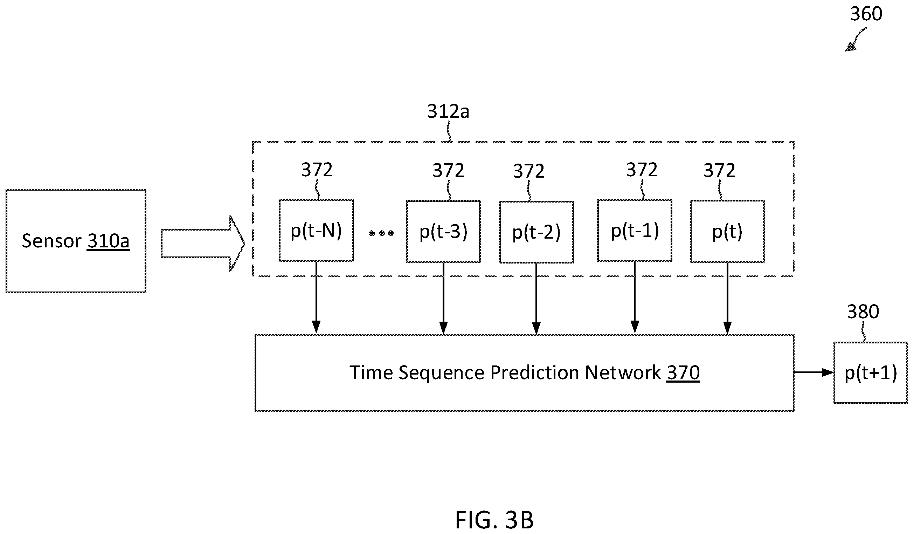

In some aspects, it may be desirable to identify a UE context scenario based on past sensor information in addition to current sensor information, for example, using a time sequence prediction model as shown in FIG. 3B.

FIG. 3B illustrates a UE context scenario identification scheme 360 according to some aspects of the present disclosure. The scheme 360 may be employed by a UE such as the UEs 115 in a network such as the network. In particular, the UE may implement the scheme 360 as part of the scheme 300. For instance, the machine learning-based network 320 of FIG. 3A may include a time sequence prediction network 370 as shown in FIG. 3B. In the scheme 360, the time sequence network 370 may receive a sequence of sensor data in a time order for each sensor and predict a data point at a future time. Although FIG. 3B illustrates one sensor (e.g., the sensor 310a) capturing a sequence of data for processed by the time sequence prediction network 370, it should be understood that in other examples the time sequence prediction network 370 may process any suitable number of sequences of sensor data from any suitable number of sensors (e.g., about 2, 3, 4, 5, or more).

In the illustrate example of FIG. 3B, the sensor 310a captures a sequence of sensor data 312a over a set of time points or instants, denoted as {t, t-1, t-2, t-3, ..., t-N}. The sequence of sensor data 312a includes sensor data 372 captured at each time instant. The sensor data 372 at time instants {t, t-1, t-2, t-3, ..., t-N} are represented by {p(t), p(t-1), p(t-2), p(t-3), ..., p(t-N)}. The sensor data 372 p(t) may represent data captured by the sensor 310a at a current time (t). The sensor data 372 p(t-1), p(t-2), p(t-3), ...., p(t-N) are past sensor data captured by the sensor 310a and stored at the UE 115. The time sequence prediction network 370 may receive the sequence of sensor data 312a as inputs and predict a data point 380 at a next time instant (t+1) from the sequence of sensor data 312a. The predicted data point 380 is represented by p(t+1). As an example, the sensor 310a may be a GPS and the sequence of sensor data 312a {p(t), p(t-1), p(t-2), p(t-3), ..., p(t-N)} may correspond to locations of the UE 115 over the set of time instants {t, t-1, t-2, t-3, ..., t-N}, and the time sequence prediction network 370 may predict a location of the UE 115 at time (t+1). In general, each of the sensors 310 may capture a sequence of sensor data 312 over a set of time instants, where the sequence of sensor data 312 is served as inputs to the time sequence prediction network 370, and the time sequence prediction network 370 may output a predicted context scenario associated with the UE 115. In some aspects, the time sequence prediction network 370 may be implemented as a convolutional encoding/decoding-based network. The time sequence prediction network 370 may be trained to predict a next data point for a particular sensor 310 or for a subset of sensors. In some other aspects, In some other aspects, the time sequence prediction network 370 may be implemented using any suitable machine learning-based or deep learning-based techniques, such as a recurrent convolutional neural network.

As discussed, in some aspects, it may be desirable for the UE 115 to provide the context scenario to a BS 105 so that the BS 105 may configure the UE 115 with a most suitable or optimized configuration for operating under the context scenario.

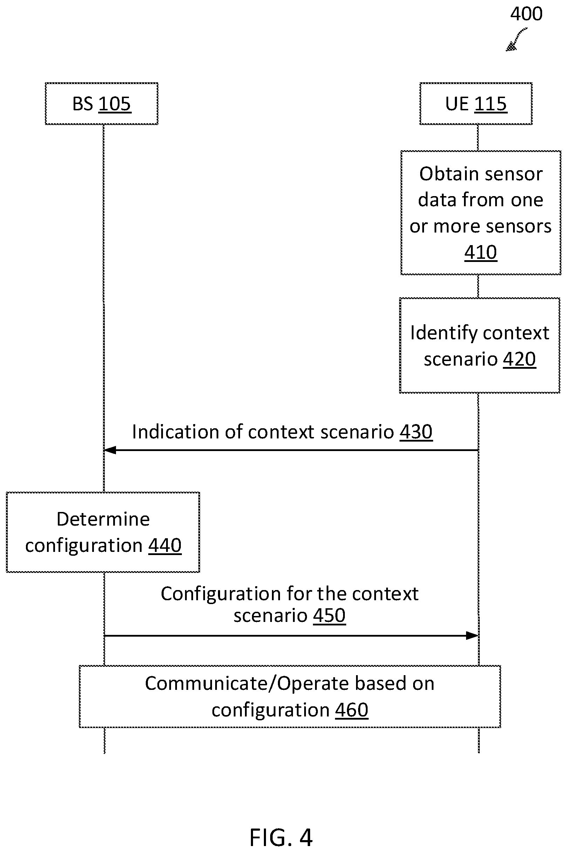

FIG. 4 is a sequence diagram illustrating a UE context scenario indication-based configuration method 400 according to some aspects of the present disclosure. The method 400 may be implemented between a UE 115 and a BS 105 in the network 100. As illustrated, the method 400 includes a number of enumerated actions, but aspects of the method 400 may include additional actions before, after, and in between the enumerated actions. In some aspects, one or more of the enumerated actions may be omitted or performed in a different order. The method 400 may be implemented in conjunction with the scheme 300.

At action 410, the UE 115 obtains sensor data (e.g., the sensor data 312) from one or more sensors (e.g., the sensors 310). For instance, the UE 115 may be equipped with sensors (e.g., the sensors 310), such as a GPS, a microphone, a camera, an accelerometer, a gyroscope, a magnetometer, a biometric sensor, and/or any other types of sensors. Depending on the sensor types, the sensor data may include geographical location information, acceleration information, directional information, orientation information, surrounding information (e.g., audio, images), and/or vital signals (e.g., temperature, blood pressure, heart rate, respiratory rate) associated with the UE 115. In some aspects, the UE 115 may configure the one or more sensors to capture the sensor data at certain time instants (e.g., periodic capture) and/or based on certain events or triggers (e.g., aperiodic capture).

At action 420, the UE 115 identifies a context scenario from the sensor data. The context scenario may be associated with at least one of a surrounding environment of the UE 115 or a status of a user of the UE 115. In some aspects, the UE 115 may apply the context scenario from a set of predefined or predetermined context scenarios. The set of context scenarios may be associated with at least one of a user location, a user activity (e.g., sleep, awake), or a user health status. Some examples of user locations may include at least one of a home, an office, a way of transportation or vehicle (e.g., a car, a bus, an airplane, a high-speed train, etc.) in use, a transit path between a first place (e.g., indoor) and a second place (e.g., outdoor), and/or a public gathering place (e.g., coffee shop or shopping mall).

In some aspects, the UE 115 may identify a current context scenario by applying a machine learning-based network (e.g., the machine learning-based network 320 and/or the time sequence prediction network 370) to the sensor data as discussed in relation to FIGS. 3A and 3B. For instance, the machine learning-based network may be trained to identify a context scenario from the set of context scenarios. In some aspects, the machine learning-based network may be a convolutional network (e.g., a convolutional neural network). The machine learning-based network may receive the sensor data as inputs and extract features associated with the set of context scenarios from the sensor data. The machine learning-based network may classify the sensor data into categories corresponding to the set of context scenarios. The machine learning-based network may provide a score for each context scenario in the set indicating a likelihood of the input sensor data representing the respective context scenario. The identified context scenario may correspond to the context scenario with the highest score predicted by the machine learning-based network. Additionally or alternatively, the machine learning-based network may include a time sequence prediction network (e.g., the network 370). The machine learning-based network may receive a sequence of sensor data captured by at least a first sensor of the or more sensors at a series of time instants. The time sequence prediction network may be trained to identify a trend or predict a context scenario at a next time instant based on the time sequence of sensor data.

At action 430, the UE 115 transmits an indication of the identified context scenario to the BS 105. For instance, each context scenario in the set of context scenarios may be represented by an index, the indication may include an index value identifying identified context scenario in the set of context scenarios.

At action 440, upon receiving the indication of the context scenario from the UE 115, the BS 105 may determine a configuration (e.g., an optimized configuration) for the UE 115 based on the indicated context scenario. The BS 105 may optimize the configuration for resource utilization at the UE, power consumption at the UE, system performance at the UE, and/or user experiences. The following provides several nonlimiting examples for configuring the UE 115 based on the indicated context scenario. In a first example, if the context scenario indicates the user is at home (e.g., the scenario 332) and a current time is 3:00 am, the BS 105 may reduce the amount of scheduling for the UE 115 or configure the UE 115 to enter a low-power mode to save power at the UE 115. In a second example, if the context scenario indicates the user is at home and a current time is 6:00 am, the BS 105 may configure the UE 115 to perform an active sync (to synchronize data, meeting calendars, etc.) between the UE 115 and a desktop computer or a cloud storage.

In a third example, if the context scenario indicates the user is travelling in a high-speed train (e.g., the scenario 346), the BS 105 may configure the UE 115 with high-density DMRS resources to enable the UE 115 to obtain an accurate channel estimate in the high-doppler mode. Additionally, the BS 105 may prepare the UE 115 for handover. The real-time indication of the context scenario can allow the BS 105 to quickly select a target BS for the handover and configure the UE 115 with resources (e.g., contention-free random access resources) for performing the handover. Conventional mechanisms where handover is determined based on signal measurements at a UE and/or at a BS may have a longer response time before the BS and/or the UE are aware of a need for handover. For instance, by the time the handover is triggered, the UE may have already experienced packet loss and triggered retransmissions. Accordingly, the real-time context scenario indication can also improve transmission latency and/or reliability. In a fourth example, if the context scenario indicates the user is on a flight (e.g., the scenario 342), the BS 105 may configure the UE 115 to switch on the airplane mode (which turns off cellular voice and data connections) instead of having the user to manually switch on the airplane mode. Accordingly, the real-time context scenario indication can reduce user actions, and thus reduce power consumption at the UE 115. In a fifth example, if the context scenario indicates the user is in a car (e.g., the scenario 340), the BS 105 may configure the UE 115 to start a navigation application and dynamically report the positions and/or driving instructions to provide the user with auto-navigation.

In a sixth example, if the context scenario indicates the user is in an office and the UE 115 is on a desk (e.g., the scenario 334), the BS 105 may configure the UE 115 to be in a silent mode (with no ring tone). In a seventh example, if the context scenario indicates the user is at a public gathering place (e.g., coffee shop, mall), the BS 105 may be aware that the traffic may be congested, and thus may configure the UE 115 to communicate over multiple frequency bands. In an eighth example, if the context scenario indicates the user is moving from between indoor and outdoor, the BS 105 may configure the UE 115 to scan different frequency channels. In general, the configuration may indicate at least one of scheduling information, a reference signal resource allocation, a channel scan operation, an operational mode switch, or an initiation of an application.

At action 450, the BS 105 transmits the configuration for the context scenario to the UE 115. In some instances, the configuration can be an RRC configuration (e.g., a UE-specific RRC configuration). In some instances, the can be carried in a downlink control information (DCI) message. In some instances, the BS 105 may configure the UE 115 with various configurations via an RRC configuration (e.g., in a table format) and may indicate the configuration to the UE via a DCI message (e.g., an index referencing one of the configurations).

At action 460, the BS 105 may communicate with the UE 115 according to the configuration. Additionally or alternatively, the UE 115 may operate (e.g., in an airplane mode or navigation mode) according to the configuration.

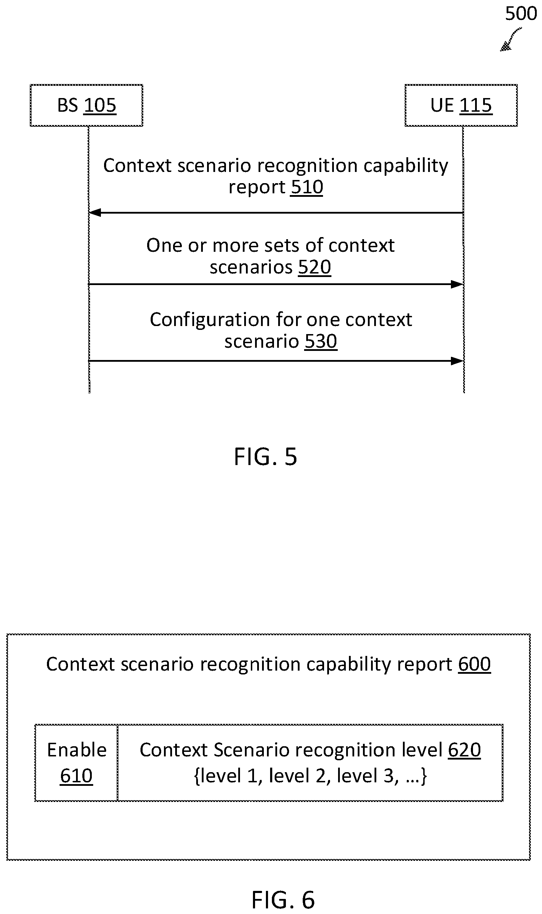

In some aspects, different UEs 115 may have different capabilities, in terms of available sensors and/or AI engine capabilities (e.g., machine learning capabilities). For example, a premium UE 115 (e.g., a high-end UE) may be equipped with a wide variety of sensors, and powerful AI engines. Accordingly, a premium UE 115 may be capable of recognizing or identifying a wide variety of context scenarios (e.g., a full set of context scenarios). A mid-end UE 115 may be equipped with a reduced set of sensors compared to the high-end UE 115, and may have limited AI processing power. Accordingly, a mid-end UE 115 may be capable of recognizing or identifying a subset of the context scenarios. A low-end UE 115 may be equipped with a limited set of sensors, and may not have an AI engine. Accordingly, a low-end UE 115 may not support context scenario recognition. To facilitate UE context scenario-based configuration, a UE 115 may report its capability to a BS 105. FIGS. 5-8 are discussed in relation to each other to illustrate UE context scenario recognition reporting and UE context scenario-based configuration.

FIG. 5 is a sequence diagram illustrating a UE context scenario indication-based configuration method 500 according to some aspects of the present disclosure. The method 500 may be implemented between a UE 115 and a BS 105 in the network 100. As illustrated, the method 500 includes a number of enumerated actions, but aspects of the method 500 may include additional actions before, after, and in between the enumerated actions. In some aspects, one or more of the enumerated actions may be omitted or performed in a different order. The method 500 may be implemented in conjunction with the method 500 discussed above in relation to FIG. 4, the scheme 300 discussed above in relation to FIG. 3A, and/or the scheme 360 discussed above in relation to FIG. 3B.

At action 510, the UE 115 transmits a context scenario recognition capability report (e.g., the report 600 shown in FIG. 6) to the BS 105. The report may indicate to the BS 105 whether context scenario recognition or identification is supported or not supported at the UE 115 and/or a context scenario recognition capability level as shown in FIG. 6.

FIG. 6 illustrates a UE context scenario capability report 600 according to some aspects of the present disclosure. As shown, the report 600 includes an enable field 610 and a context scenario recognition level field 620. The enable field 610 may have a value of 1 or 0. For instance, a value of 1 may indicate that the UE 115 supports context scenario recognition, and a value of 0 may indicate that the UE 115 does not support context scenario recognition, or vice versa. The context scenario recognition level field 620 may have values enumerated from 1 to N, for example, corresponding level 1 to level N. For instance, the different levels may indicate different types of context scenarios that the UE 115 may be able to recognize. In an example, the UE context scenario capability report 600 may be encoded as shown below:

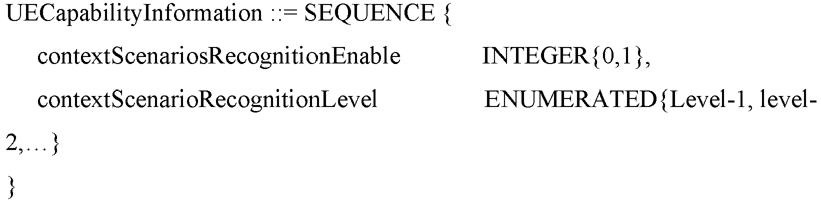

In some aspects, the context scenario recognition level may be associated with a sensor capability at the UE 115. For instance, the sensor capability may refer to the range of sensors available at the UE 115. In some aspects, the context scenario recognition level may be associated with a machine learning-based network capability at the UE 115. For instance, the machine learning-based network capability may refer to the types of machine learning-based algorithms (e.g., convolutional layer processing or time sequence model) implemented by the UE 115 and/or a computational capability (e.g., processing power) of the UE 115. For instance, a more complex machine learning algorithm may be capable of identifying a larger set of context scenarios, but may also consume more processing power at the UE 115.

Returning to FIG. 5, at action 520, upon receiving the context scenario recognition capability report and if the UE 115 indicated context scenario recognition is supported, the BS 105 configures the UE 115 with one or more sets of context scenarios based on the indicated context scenario recognition level. For instance, the BS 105 may predefine multiple sets of context scenarios related to UE capabilities. As an example, the BS 105 may have a first set related to ways of transportation or vehicles and a second set related to user's locations and/or activities as shown below:

```
       First set = {high-speed train, car, bus, ...};
       Second set = {on a bed, on a desk, in a mall, from outdoor to indoor, ... }.
```

If the BS 105 configures the UE 115 with the first set, the UE 115 may identify a context scenario from the first set based on sensor data (e.g., the sensor data 312a, 312b, 312c, ...) acquired at the UE 115. If the BS 105 configures the UE 115 with the second set, the UE 115 may identify a context scenario from the second set based on sensor data (e.g., the sensor data 312a, 312b, 312c, ...) acquired at the UE 115. If the BS 105 configures the UE 115 with the first set and the second set, the UE 115 may identify a context scenario from the first set or the second set based on sensor data (e.g., the sensor data 312a, 312b, 312c, ...) acquired at the UE 115.

At action 530, after configuring the UE 115 with the one or more sets of context scenarios, the BS 105 may further configure the UE with a configuration for one context scenario (e.g., a first context scenario) of the one or more sets of context scenarios. For instance, the first context scenario may be a context scenario indicated by the UE 115 as discussed above in relation to FIG. 4. The configuration may include, but not limited to, scheduling information, a reference signal resource allocation, a channel scan operation, an operational mode switch, and/or an initiation of an application.

Subsequently, the UE 115 may acquire sensor data, identify a current context scenario from the acquired sensor data, indicate the current context scenario to the BS 105, and receive a configuration (e.g., an optimized configuration) for operating in the context scenario as discussed above in relation to FIG. 4. In some aspects, when the UE 115 indicates a new context scenario (different from the current context scenario) to the BS 105, the BS 105 may configure the UE 115 to switch to a different configuration that is most suitable (optimized) for the new context scenario.

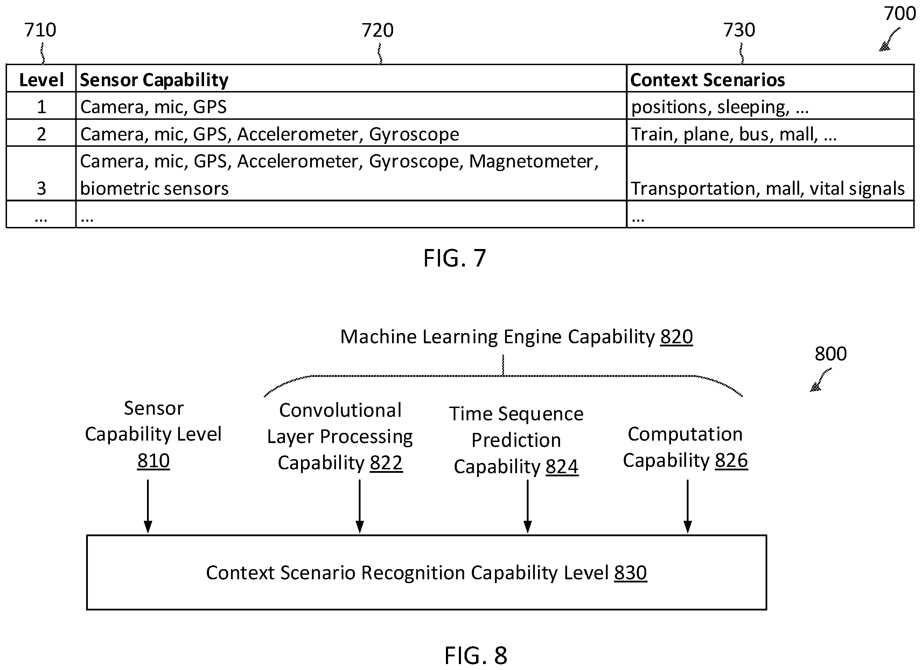

FIG. 7 is a table 700 illustrating UE context scenario set-to-sensor capability mapping according to some aspects of the present disclosure. The table 700 may be employed by the BS 105 and/or the UE 115 for context scenario set mapping. In particular, the UE 115 may report a context scenario recognition level (e.g., in a context scenario recognition capability report 600) according to the table 700, and the BS 105 may configure the UE 115 with a set of context scenarios according to the table 700.

As shown, the table 700 includes a column 710 indicating sensor capability levels, a column 720 indicating sensor capability (e.g., the set of available sensors 310 at the UE 115), and a column 730 indicating context scenarios. Each row may indicate a level for a corresponding set of sensors at the UE 115 and a corresponding set of context scenarios that the UE 115 may be able to recognize or identify with the set of available sensors.

In the illustrated example of FIG. 7, if the UE 115 is equipped with a camera, a microphone (mic), and a GPS, the UE 115 may indicate a context scenario recognition level of 1 (e.g., level 1). If the UE 115 is equipped with a camera, a microphone, a GPS, an accelerometer, a gyroscope, the UE 115 may indicate a context scenario recognition level of 2 (e.g., level 2). If the UE 115 is equipped with a camera, a microphone, a GPS, an accelerometer, a gyroscope, a magnetometer, and biometric sensors, the UE 115 may indicate a context scenario recognition level of 3 (e.g., level 3). Similarly, if the BS 105 receives an indication of a context scenario recognition level of 1 from the UE 115, the BS 105 may configure the UE 115 with a set of context scenarios {positions of the UE 115, sleeping, ...}. If the BS 105 receives an indication of a context scenario recognition level of 2 from the UE 115, the BS 105 may configure the UE 115 with a set of context scenarios {train, plane, bus, mall, ...}. If the BS 105 receives an indication of a context scenario recognition level of 3 from the UE 115, the BS 105 may configure the UE 115 with a set of context scenarios {transportation, mall, vital signals, ... }. In general, the BS 105 and/or the UE 115 may define any suitable number of sensor capability levels with any suitable combinations of sensor types and the BS 105 may define any suitable context scenarios for each level.

In some aspects, the BS 105 may determine a mapping between the sensor capability levels (column 710) and corresponding sensor capability or range of sensors (column 720) and configure the UE 115 with the mapping. In some aspects, the mapping between a sensor capability level and a set of sensors may be predetermined, for example, by a wireless communication standard, such as 3GPP. Similarly, the mapping between the context scenario sets and sensor capability levels may be determined by the BS 105 or predetermined by a wireless communication standard.

FIG. 8 illustrates a context scenario recognition capability level configuration 800 according to some aspects of the present disclosure. The configuration 800 may be employed by a UE 115, for example, in conjunction with the method 500 to determine the context scenario recognition capability report. As shown, the UE 115 may determine a context scenario recognition capability level 830 based on a sensor capability level 810 and machine learning-based network capability 820. The sensor capability level 810 may be determined using the table 700 discussed above. The machine learning-based network capability 820 may include a convolutional layer processing capability 822, a time sequence prediction capability 824, and a computation capability 826. The convolutional layer processing capability 822 may refer to whether the UE 115 implements convolutional layers (e.g., as discussed above in relation to FIG. 3A) in the machine learning-based network 320 and/or a number of convolutional layers in the machine learning-based network 320. The time sequence prediction capability 824 may refer to whether the UE 115 implements a time sequence prediction network as discussed above in relation to FIG. 3B. The computation capability 826 may refer to the processing power of the UE 115, for example, a number of operations that the UE 115 may process per unit time. In some aspects, the UE 115 may determine the context scenario recognition capability level 830 based on a weighted sum for the sensor capability level 810, the convolutional layer processing capability 822, the time sequence prediction capability 824, and the computation capability 826.

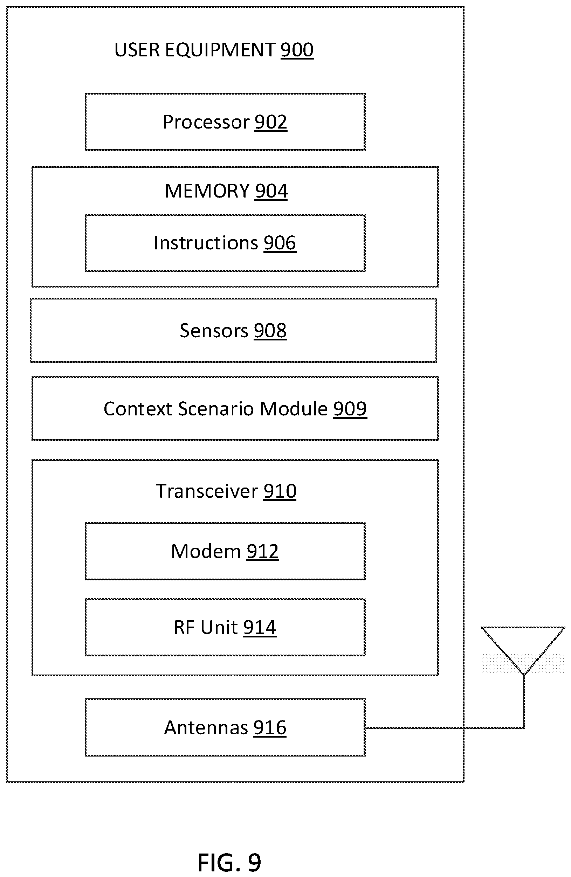

FIG. 9 is a block diagram of an exemplary UE 900 according to some aspects of the present disclosure. The UE 900 may be a UE 115 discussed above in FIG. 1. As shown, the UE 900 may include a processor 902, a memory 904, one or more sensors 908, a context scenario module 909, a transceiver 910 including a modem subsystem 912 and a radio frequency (RF) unit 914, and one or more antennas 916. These elements may be in direct or indirect communication with each other, for example via one or more buses.

The processor 902 may have various features as a specific-type processor. For example, these may include a central processing unit (CPU), a digital signal processor (DSP), an application specific integrated circuit (ASIC), a controller, a field programmable gate array (FPGA) device, another hardware device, a firmware device, or any combination thereof configured to perform the operations described herein. The processor 902 may also be implemented as a combination of computing devices, e.g., a combination of a DSP and a microprocessor, a plurality of microprocessors, one or more microprocessors in conjunction with a DSP core, or any other such configuration.

The memory 904 may include a cache memory (e.g., a cache memory of the processor 1002), random access memory (RAM), magnetoresistive RAM (MRAM), read-only memory (ROM), programmable read-only memory (PROM), erasable programmable read only memory (EPROM), electrically erasable programmable read only memory (EEPROM), flash memory, solid state memory device, hard disk drives, other forms of volatile and non-volatile memory, or a combination of different types of memory. In some aspects, the memory 904 may include a non-transitory computer-readable medium. The memory 1004 may store, or have recorded thereon, instructions 906. The instructions 906 may include instructions that, when executed by the processor 902, cause the processor 902 to perform the operations described herein with reference to the UEs 115 in connection with aspects of the present disclosure, for example, aspects of FIGS. 1-2, 3A-3B, 4-8 and 11. Instructions 906 may also be referred to as program code. The program code may be for causing a wireless communication device to perform these operations, for example by causing one or more processors (such as processor 902) to control or command the wireless communication device to do so. The terms "instructions" and "code" should be interpreted broadly to include any type of computer-readable statement(s). For example, the terms "instructions" and "code" may refer to one or more programs, routines, sub-routines, functions, procedures, etc. "Instructions" and "code" may include a single computer-readable statement or many computer-readable statements.

The sensors 908 may include a wide variety of sensors (e.g., the sensors 310). For instance, the sensors 908 may include a GPS, a microphone, a camera, an accelerometer, a gyroscope, a magnetometer, a biometric sensor, and/or any other types of sensors. Each sensor 908 may be configured to capture sensor information periodically or triggered by certain events.

The context scenario module 909 may be implemented via hardware, software, or combinations thereof. For example, the context scenario module 909 may be implemented as a processor, circuit, and/or instructions 906 stored in the memory 904 and executed by the processor 902. In some instances, the context scenario module 909 can be integrated within the modem subsystem 912. For example, the context scenario module 909 can be implemented by a combination of software components (e.g., executed by a DSP or a general processor) and hardware components (e.g., logic gates and circuitry) within the modem subsystem 912.

The context scenario module 909 may communicate with various components of the UE 900 to perform various aspects of the present disclosure, for example, aspects of FIGS. 1-2, 3A-3B, 4-8, and 11. For instance, the context scenario module 909 is configured to obtain sensor data from the sensors 908, identify a first context scenario associated with a surrounding environment of the UE 900 or a user status based on the sensor data, transmit an indication of the first context scenario to a BS (e.g., the BSs 105), and receive a configuration for the first context scenario from the BS.

In some aspects, the context scenario module 909 is configured to identify the first context scenario from a set of context scenarios. The set of context scenarios may be associated with at least one of a user location, a user activity, or a user health status. The context scenario module 909 may be configured to implement a machine learning-based network (e.g., the machine learning-based network 320) and identify the first context scenario from the set of context scenarios by applying the machine learning-based network to the obtained sensor data as discussed above in relation to FIGS. 3A-3B. In some aspects, the context scenario module 909 is configured to transmit a context scenario capability report to the BS 105 and receive one or more sets of context scenarios for context scenario recognition as discussed above in relation to FIGS. 5-8.

As shown, the transceiver 910 may include the modem subsystem 912 and the RF unit 914. The transceiver 910 can be configured to communicate bi-directionally with other devices, such as the BSs 105. The modem subsystem 912 may be configured to modulate and/or encode data according to a MCS, e.g., a LDPC coding scheme, a turbo coding scheme, a convolutional coding scheme, a polar coding scheme, a digital beamforming scheme, etc. The RF unit 914 may be configured to process (e.g., perform analog to digital conversion or digital to analog conversion, etc.) modulated/encoded data (e.g., context scenario recognition capability report, context scenario recognition capability level, context scenario indication, UL data, UL control information) from the modem subsystem 912 (on outbound transmissions) or of transmissions originating from another source such as a UE 115 or a BS 105. The RF unit 914 may be further configured to perform analog beamforming in conjunction with the digital beamforming. Although shown as integrated together in transceiver 910, the modem subsystem 912 and/or the RF unit 914 may be separate devices that are coupled together at the UE 900 to enable the UE 900 to communicate with other devices.

The RF unit 914 may provide the modulated and/or processed data, e.g. data packets (or, more generally, data messages that may contain one or more data packets and other information), to the antennas 916 for transmission to one or more other devices. The antennas 916 may further receive data messages transmitted from other devices and provide the received data messages for processing and/or demodulation at the transceiver 910. The transceiver 910 may provide the demodulated and decoded data (e.g., scheduling information, resource configuration, context scenario set for context scenario recognition, UE context scenario-based configuration, DL data, DL control information) to the context scenario module 909 for processing. The antennas 916 may include multiple antennas of similar or different designs in order to sustain multiple transmission links.

In an aspect, the processor 902 is configured to communicate with various components of the UE 900 to obtain, from one or more sensors 908, sensor data, identify, based on the sensor data, a first context scenario associated with a surrounding environment of the UE 900 or a user status. The transceiver 910 is configured to communicate with various components of the UE 900 to transmit, to a base station (BS), an indication of the first context scenario and receive, from the BS in response to the indication, a first configuration for the first context scenario.

In an aspect, the UE 900 can include multiple transceivers 910 implementing different RATs (e.g., NR and LTE). In an aspect, the UE 900 can include a single transceiver 910 implementing multiple RATs (e.g., NR and LTE). In an aspect, the transceiver 910 can include various components, where different combinations of components can implement different RATs.

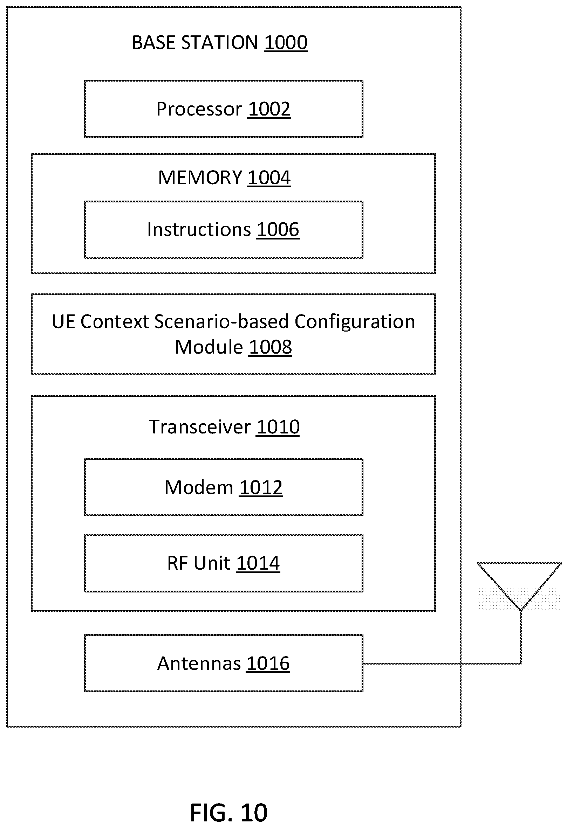

FIG. 10 is a block diagram of an exemplary BS 1000 according to some aspects of the present disclosure. The BS 1000 may be a BS 105 in the network 100 as discussed above in FIG. 1. As shown, the BS 1000 may include a processor 1002, a memory 1004, an UE context scenario-based configuration module 1008, a transceiver 1010 including a modem subsystem 1012 and an RF unit 1014, and one or more antennas 1016. These elements may be in direct or indirect communication with each other, for example via one or more buses.

The processor 1002 may include a CPU, a DSP, an ASIC, a controller, an FPGA device, another hardware device, a firmware device, or any combination thereof configured to perform the operations described herein. The processor 1002 may also be implemented as a combination of computing devices, e.g., a combination of a DSP and a microprocessor, a plurality of microprocessors, one or more microprocessors in conjunction with a DSP core, or any other such configuration.

The memory 1004 may include a cache memory (e.g., a cache memory of the processor 1002), RAM, MRAM, ROM, PROM, EPROM, EEPROM, flash memory, solid state memory device, hard disk drives, other forms of volatile and non-volatile memory, or a combination of different types of memory. In an aspect, the memory 1004 includes a non-transitory computer-readable medium. The memory 1004 may store instructions 1006. The instructions 1006 may include instructions that, when executed by the processor 1002, cause the processor 1002 to perform operations described herein, for example, aspects of FIGS. 1-2, 3A-3B, 4-8, and 12. Instructions 1006 may also be referred to as code, which may be interpreted broadly to include any type of computer-readable statement(s) as discussed above.

The UE context scenario-based configuration module 1008 may be implemented via hardware, software, or combinations thereof. For example, the UE context scenario-based configuration module 1008 may be implemented as a processor, circuit, and/or instructions 1006 stored in the memory 1004 and executed by the processor 1002. In some instances, the UE context scenario-based configuration module 1008 can be integrated within the modem subsystem 1012. For example, the UE context scenario-based configuration module 1008 can be implemented by a combination of software components (e.g., executed by a DSP or a general processor) and hardware components (e.g., logic gates and circuitry) within the modem subsystem 1012.

The UE context scenario-based configuration module 1008 may communicate with various components of the BS 1000 to perform various aspects of the present disclosure, for example, aspects of FIGS. 1-2, 3A-3B, 4-8, and 12. For instance, the UE context scenario-based configuration module 1008 is configured to receive, from a UE (e.g., the UEs 115 and/or 900), an indication of a first context scenario associated with at least one of a surrounding of the UE or a user status and transmit a first configuration for the first context scenario to the UE. In some aspects, the UE context scenario-based configuration module 1008 is further configured to select the first configuration from among a set of configuration associated with a set of context scenarios including the first context scenario, where the first configuration is associated with the first context scenario. The set of context scenarios may be associated with at least one of a user location, a user activity, or a user health status. In some aspects, the UE context scenario-based configuration module 1008 is configured to receive a context scenario capability report (e.g., an enabled mode and/or a context scenario recognition capability level) from the UE, determine one or more sets of context scenarios based on the context scenario capability report for the context scenario recognition, and configure the UE with the one or more sets of context scenarios as discussed above in relation to FIGS. 5-8.

As shown, the transceiver 1010 may include the modem subsystem 1012 and the RF unit 1014. The transceiver 1010 can be configured to communicate bi-directionally with other devices, such as the BSs 105 and/or another core network element. The modem subsystem 1012 may be configured to modulate and/or encode the data from the memory 1004 and/or the UE context scenario-based configuration module 1008 according to a modulation and coding scheme (MCS), e.g., a low-density parity check (LDPC) coding scheme, a turbo coding scheme, a convolutional coding scheme, a polar coding scheme, a digital beamforming scheme, etc. The RF unit 1014 may be configured to process (e.g., perform analog to digital conversion or digital to analog conversion, etc.) modulated/encoded data (e.g., scheduling information, resource configuration, context scenario set for context scenario recognition, UE context scenario-based configuration, DL data, DL control information) from the modem subsystem 1012 (on outbound transmissions) or of transmissions originating from another source such as a UE 115. The RF unit 1014 may be further configured to perform analog beamforming in conjunction with the digital beamforming. Although shown as integrated together in transceiver 1010, the modem subsystem 1012 and the RF unit 1014 may be separate devices that are coupled together at the BS 1000 to enable the BS 1000 to communicate with other devices.

The RF unit 1014 may provide the modulated and/or processed data, e.g. data packets (or, more generally, data messages that may contain one or more data packets and other information), to the antennas 1016 for transmission to one or more other devices. The antennas 1016 may further receive data messages transmitted from other devices. The antennas 1016 may provide the received data messages for processing and/or demodulation at the transceiver 1010. The transceiver 1010 may provide the demodulated and decoded data (e.g., context scenario recognition capability report, context scenario recognition capability level, context scenario indication, UL data, UL control information) to the UE context scenario-based configuration module 1008 for processing. The antennas 1016 may include multiple antennas of similar or different designs in order to sustain multiple transmission links. The RF unit 1014 may configure the antennas 1016.

In an aspect, the transceiver 1010 is configured to communicate various components of the BS 1000 to receive, from a user equipment (UE), an indication of a first context scenario associated with at least one of a surrounding environment of the UE or a user status and transmit, to the UE in response to the indication, a first configuration for the first context scenario.

In an aspect, the BS 1000 can include multiple transceivers 1010 implementing different RATs (e.g., NR and LTE). In an aspect, the BS 1000 can include a single transceiver 1010 implementing multiple RATs (e.g., NR and LTE). In an aspect, the transceiver 1010 can include various components, where different combinations of components can implement different RATs.

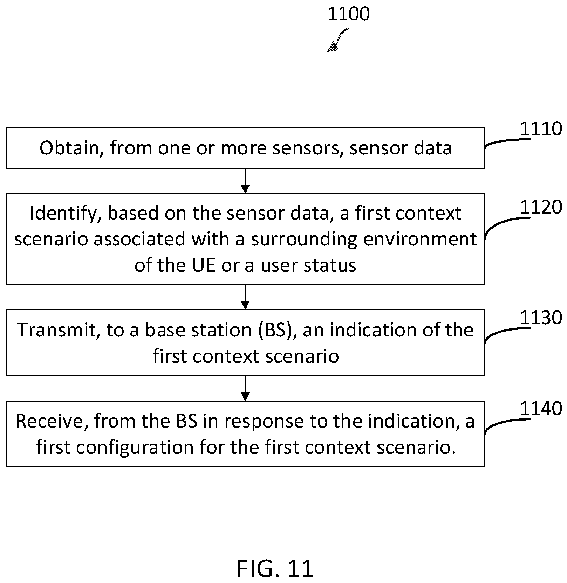

FIG. 11 is a flow diagram of a communication method 1100 according to some aspects of the present disclosure. Aspects of the method 1100 can be executed by a UE, such as the UEs 115 and/or 900. A UE may comprise a processor, processing circuit, and/or any other suitable component or means for performing the steps. For example, a UE 900 may utilize one or more components, such as the processor 902, the memory 904, the sensors 908, the context scenario module 909, the transceiver 910, the modem 912, and the one or more antennas 916, to execute the steps of method 1100. The method 1100 may employ similar mechanisms as discussed above with respect to FIGS. 1-8. As illustrated, the method 1100 includes a number of enumerated steps, but aspects of the method 1100 may include additional steps before, after, and in between the enumerated steps. In some aspects, one or more of the enumerated steps may be omitted or performed in a different order.

At block 1110, a UE (e.g., UE 115 or UE 900) obtains sensor data from one or more sensors, sensor data. In some aspects, the one or more sensors may include at least one of a camera, a microphone, a global positioning system (GPS), an accelerometer, a gyroscope, a magnetometer, or a biometric sensor. The UE may configure the one or more sensors to acquire the sensor data periodically or based on certain event triggers. In some aspects, the UE may utilize one or more components, such as the processor 902, the memory 904, the sensors 908, the context scenario module 909, the transceiver 910, the modem 912, and the one or more antennas 916, to perform the operations at block 1110.

At block 1120, the UE identifies, based on the sensor data, a first context scenario associated with a surrounding environment of the UE or a user status. In some aspects, the UE may identify the first context scenario from a set of context scenarios. In some aspects, the set of context scenarios may be associated with at least one of a user location, a user activity status, or a user health status. In some aspects, the user location may include at least one of a home, an office, a vehicle, a transit path between a first place and a second place, or a public gathering place. In some aspects, the UE may identify the first context scenario by applying a machine learning-based network to the sensor data. The machine learning-based network may be trained to identify a context scenario from the set of context scenarios. In some aspects, the machine learning-based network may include a convolutional network, and the UE may identify the first context scenario by applying the convolutional network to the sensor data. In some aspects, the sensor data may include a sequence of sensor data in a time order, and the machine learning-based network may include a time sequence prediction network. The UE may identify the first context scenario by applying the time sequence prediction network to the sequence of sensor data, for example, to predict a next context scenario in time. In some aspects, the UE may utilize one or more components, such as the processor 902, the memory 904, the sensors 908, the context scenario module 909, the transceiver 910, the modem 912, and the one or more antennas 916, to perform the operations at block 1120.

At block 1130, the UE transmits, to a BS (e.g., a BS 105 or BS 1000), an indication of the first context scenario. In some aspects, the UE may utilize one or more components, such as the processor 902, the memory 904, the sensors 908, the context scenario module 909, the transceiver 910, the modem 912, and the one or more antennas 916, to perform the operations at block 1130.

At block 1140, the UE receives, from the BS in response to the indication, a first configuration for the first context scenario. In some aspects, the first configuration may indicate at least one of scheduling information, a reference signal resource allocation, a channel scan operation, an operational mode switch, or an initiation of an application. In some aspects, as part of receiving the first configuration, the UE may receive an indication to switch from a second configuration (e.g., a current configuration) associated with a second context scenario to the first configuration (e.g., a new configuration). In some aspects, the UE may utilize one or more components, such as the processor 902, the memory 904, the sensors 908, the context scenario module 909, the transceiver 910, the modem 912, and the one or more antennas 916, to perform the operations at block 1130. In some aspects, the UE may utilize one or more components, such as the processor 902, the memory 904, the sensors 908, the context scenario module 909, the transceiver 910, the modem 912, and the one or more antennas 916, to perform the operations at block 1140.

In some aspects, the UE may further transmit, to the BS, a context scenario recognition capability report (e.g., the report 600). In some aspects, the context scenario recognition capability report may include a value indicating whether context scenario recognition is supported or not supported. In some aspects, the context scenario recognition capability report may include a context scenario recognition level. In some aspects, the UE may further determine the context scenario recognition level based on at least one of a sensor capability associated with the one or more sensors or a machine learning-based network capability. In some aspects, the machine learning-based network capability may be associated with at least one of a convolutional layer processing capability, a time sequence prediction capability, or a computational capability at the UE. In some aspects, the UE may further receive, from the BS in response to the context scenario recognition capability report, at least one set of context scenarios including the first context scenario. In some aspects, as part of identifying the first context scenario, the UE may identify the first context scenario from the at least one set of context scenarios based on the sensor data.

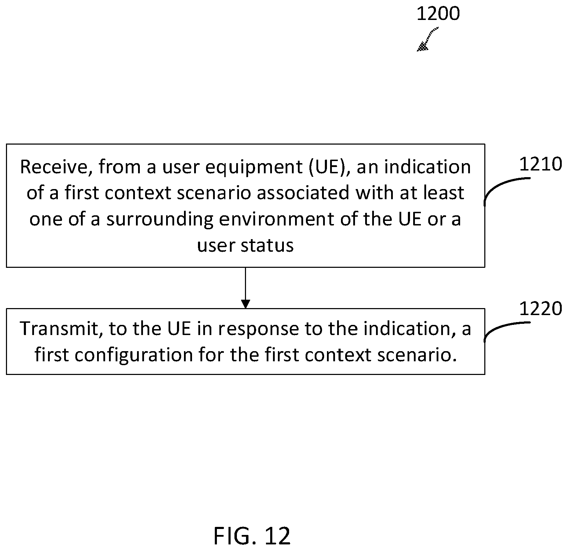

FIG. 12 is a flow diagram of a communication method 1200 according to some aspects of the present disclosure. Aspects of the method 1200 can be executed by a BS, such as the BSs 105 and/or 900. A BS may comprise a processor, processing circuit, and/or any other suitable component or means for performing the steps. For example, a BS 1000 may utilize one or more components, such as the processor 1002, the memory 1004, the UE context scenario-based configuration module 1008, the transceiver 1010, the modem 1012, and the one or more antennas 1016, to execute the steps of method 1200. The method 1200 may employ similar mechanisms as discussed above with respect to FIGS. 1-8. As illustrated, the method 1200 includes a number of enumerated steps, but aspects of the method 1200 may include additional steps before, after, and in between the enumerated steps. In some aspects, one or more of the enumerated steps may be omitted or performed in a different order.

At block 1210, a BS (e.g., a BS 105 or a BS 1000) receives, from a UE (e.g., a UE 115 or a UE 900), an indication of a first context scenario associated with at least one of a surrounding environment of the UE or a user status. In some aspects, the BS may utilize one or more components, such as the processor 1002, the memory 1004, the UE context scenario-based configuration module 1008, the transceiver 1010, the modem 1012, and the one or more antennas 1016, to perform the operations at block 1210.

At block 1220, the BS transmits, to the UE in response to the indication, a first configuration for the first context scenario. In some aspects, the first configuration may indicate at least one of scheduling information, a reference signal resource allocation, a channel scan operation, an operational mode switch, or an initiation of an application. In some aspects, as part of transmitting the first configuration, the BS may transmit an indication to switch from a second configuration (e.g., a current configuration) associated with a second context scenario to the first configuration (e.g., a new configuration). In some aspects, the BS may utilize one or more components, such as the processor 1002, the memory 1004, the UE context scenario-based configuration module 1008, the transceiver 1010, the modem 1012, and the one or more antennas 1016, to perform the operations at block 1220.

In some aspects, the BS may further select the first configuration from among a set of configurations associated with a set of context scenarios including the first context scenario. For instance, each configuration may be suitable for one context scenario in the set. The BS may select the first configuration based on the first configuration being corresponding to the first context scenario. In some aspects, the set of context scenarios may be associated with at least one of a user location, a user activity status, or a user health status. In some aspects, the user location may include at least one of a home, an office, a vehicle, a transit path between a first place and a second place, a transportation or a public gathering place.

In some aspects, the BS may further receive a context scenario recognition capability report (e.g., the report 600) from the UE. In some aspects, the context scenario recognition capability report may include a value indicating whether context scenario recognition is supported or not supported. In some aspects, the context scenario recognition capability report may include a context scenario recognition level. In some aspects, the context scenario recognition level may be associated with at least one of a sensor capability or a machine learning-based network capability. In some aspects, the machine learning-based network capability may be associated with at least one of a convolutional layer processing capability, a time sequence predictive capability, or a computational capability. In some aspects, the BS may further transmits, to the UE in response to the context scenario recognition capability report, at least one set of context scenarios including the first context scenario. In some aspects, the BS may further selecting the at least one set of context scenarios from among a plurality of sets of context scenarios based on the context scenario recognition capability report.

Information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The various illustrative blocks and modules described in connection with the disclosure herein may be implemented or performed with a general-purpose processor, a DSP, an ASIC, an FPGA or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices (*e.g.,* a combination of a DSP and a microprocessor, multiple microprocessors, one or more microprocessors in conjunction with a DSP core, or any other such configuration).
The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described above can be implemented using software executed by a processor, hardware, firmware, hardwiring, or combinations of any of these. Features implementing functions may also be physically located at various positions, including being distributed such that portions of functions are implemented at different physical locations. Also, as used herein, including in the claims, "or" as used in a list of items (for example, a list of items prefaced by a phrase such as "at least one of" or "one or more of") indicates an inclusive list such that, for example, a list of [at least one of A, B, or C] means A or B or C or AB or AC or BC or ABC (i.e., A and B and C). The terms "about" or "approximately" may be used to denote a range of +/- 2%, unless specified otherwise.

## Claims

1. A method (1100) of wireless communication performed by a user equipment, UE, (115, 900), the method comprising:
obtaining (1110), from one or more sensors, sensor data;
identifying (1120), based on the sensor data, a first context scenario associated with a surrounding environment of the UE or a user status;
transmitting (1130), to a base station, BS, an indication of the first context scenario; and
receiving (1140), from the BS in response to the indication, a first configuration for the first context scenario, wherein the receiving the first configuration comprises at least one of: receiving the first configuration indicating at least one of scheduling information, a reference signal resource allocation, a channel scan operation, an operational mode switch, or an initiation of an application; or receiving, in response to the indication of the first context scenario, an indication to switch from a second configuration associated with a second context scenario to the first configuration.

2. The method of claim 1, wherein the identifying comprises: identifying the first context scenario from a set of context scenarios.

3. The method of claim 2, wherein the set of context scenarios is associated with at least one of a user location, a user activity status, or a user health status.

4. The method of claim 2, wherein the identifying further comprises: applying a machine learning-based network to the sensor data, wherein the machine learning-based network is trained to identify a context scenario from the set of context scenarios; and applying the machine learning-based network including a convolutional network to the sensor data.

5. The method of claim 4, wherein the sensor data includes a sequence of sensor data in a time order, and wherein the identifying further comprises: applying the machine learning-based network including a time sequence prediction network to the sequence of sensor data.

6. The method of claim 1, further comprising: transmitting, to the BS, a context scenario recognition capability report, wherein the transmitting the context scenario recognition capability report comprises at least one of: a value indicating whether context scenario recognition is supported or not supported; or a context scenario recognition level;
preferably, further comprising: determining the context scenario recognition level based on at least one of a sensor capability associated with the one or more sensors or a machine learning-based network capability, wherein the machine learning-based network capability is associated with at least one of a convolutional layer processing capability, a time sequence predictive capability, or a computational capability.

7. A method (1200) of wireless communication performed by a base station, BS, (105, 1000), the method comprising:
receiving (1210), from a user equipment, UE, an indication of a first context scenario associated with at least one of a surrounding environment of the UE or a user status; and
transmitting (1220), to the UE in response to the indication, a first configuration for the first context scenario, wherein the transmitting the first configuration comprises at least one of: transmitting the first configuration indicating at least one of scheduling information, a reference signal resource allocation, a channel scan operation, an operational mode switch, or an initiation of an application; or transmitting, in response to the indication of the first context scenario, an indication to switch from a second configuration associated with a second context scenario to the first configuration.

8. The method of claim 7, further comprising: selecting the first configuration from among a set of configurations associated with a set of context scenarios including the first context scenario, the first configuration being associated with the first context scenario;
preferably, wherein the set of context scenarios is associated with at least one of a user location, a user activity status, or a user health status, wherein the user location comprises at least one of a home, an office, a vehicle, a transit path between a first place and a second place, a transportation or a public gathering place.

9. The method of claim 7, further comprising: receiving, from the UE, a context scenario recognition capability report including a value indicating whether context scenario recognition is supported or not supported.

10. The method of claim 9, wherein the receiving the context scenario recognition capability report comprises: receiving the context scenario recognition capability report including a context scenario recognition level, wherein the context scenario recognition level is associated with at least one of a sensor capability or a machine learning-based network capability, wherein the machine learning-based network capability is associated with at least one of a convolutional layer processing capability, a time sequence predictive capability, or a computational capability; or
the method of claim 9, further comprising: transmitting, to the UE in response to the context scenario recognition capability report, at least one set of context scenarios including the first context scenario; and selecting the at least one set of context scenarios from among a plurality of sets of context scenarios based on the context scenario recognition capability report.

11. A user equipment, UE, (115, 900) comprising means for performing the method of any one of the claims 1-6.

12. A base station, BS, (105, 1000) comprising means for performing the method of any one of the claims 7-10.

13. A computer program comprising instructions, which when executed by a user equipment (900) cause the user equipment (900) to perform the method of any one of the claims 1-6, or instructions, which when executed by a base station (1000) cause the base station (1000) to perform the method of any one of the claims 7-10.

## Patentansprüche

1. Verfahren (1100) zur drahtlosen Kommunikation, das von einem Benutzergerät, UE, (115, 900) durchgeführt wird, wobei das Verfahren umfasst:
Erhalten (1110) von Sensordaten von einem oder mehreren Sensoren;
Identifizieren (1120), basierend auf den Sensordaten, eines ersten Kontextszenarios, das mit einer umliegenden Umgebung des UE oder einem Benutzerstatus assoziiert ist;
Übertragen (1130), an eine Basisstation, BS, einer Anzeige des ersten Kontextszenarios; und
Empfangen (1140), von der BS als Reaktion auf die Anzeige, einer ersten Konfiguration für das erste Kontextszenario, wobei das Empfangen der ersten Konfiguration mindestens eines von Folgendem umfasst: Empfangen der ersten Konfiguration, die mindestens eines von Planungsinformation, einer Referenzsignalressourcenzuweisung, einer Kanalscanoperation, einer Betriebsmodusumschaltung oder einer Einleitung einer Anwendung anzeigt; oder Empfangen, als Reaktion auf die Anzeige des ersten Kontextszenarios, einer Anzeige zum Umschalten von einer zweiten Konfiguration, die mit einem zweiten Kontextszenario assoziiert ist, auf die erste Konfiguration.

2. Verfahren nach Anspruch 1, wobei das Identifizieren Folgendes umfasst: Identifizieren des ersten Kontextszenarios aus einem Satz von Kontextszenarien.

3. Verfahren nach Anspruch 2, wobei der Satz von Kontextszenarien mit mindestens einem von einem Benutzerstandort, einem Benutzeraktivitätsstatus oder einem Benutzergesundheitsstatus assoziiert ist.

4. Verfahren nach Anspruch 2, wobei das Identifizieren ferner Folgendes umfasst: Anwenden eines auf maschinellem Lernen basierenden Netzwerks auf die Sensordaten, wobei das auf maschinellem Lernen basierende Netzwerk trainiert ist, um ein Kontextszenario aus dem Satz von Kontextszenarien zu identifizieren; und Anwenden des auf maschinellem Lernen basierenden Netzwerks, das ein Faltungsnetzwerk beinhaltet, auf die Sensordaten.

5. Verfahren nach Anspruch 4, wobei die Sensordaten eine Sequenz von Sensordaten in einer Zeitreihenfolge beinhalten und wobei das Identifizieren ferner Folgendes umfasst: Anwenden des auf maschinellem Lernen basierenden Netzwerks, das ein Zeitsequenzvorhersagenetzwerk beinhaltet, auf die Sequenz von Sensordaten.

6. Verfahren nach Anspruch 1, ferner umfassend: Übertragen, an die BS, eines Kontextszenarioerkennungsfähigkeitsberichts, wobei das Übertragen des Kontextszenarioerkennungsfähigkeitsberichts mindestens eines von Folgendem umfasst: einen Wert, der anzeigt, ob Kontextszenarioerkennung unterstützt wird oder nicht; oder eine Kontextszenarioerkennungsebene;
vorzugsweise ferner umfassend: Bestimmen der Kontextszenarioerkennungsebene basierend auf mindestens einem von einer Sensorfähigkeit, die mit dem einen oder den mehreren Sensoren assoziiert ist, oder einer auf maschinellem Lernen basierenden Netzwerkfähigkeit, wobei die auf maschinellem Lernen basierende Netzwerkfähigkeit mit mindestens einem von einer Faltungsschichtverarbeitungsfähigkeit, einer Zeitsequenzvorhersagefähigkeit oder einer Rechenfähigkeit assoziiert ist.

7. Verfahren (1200) zur drahtlosen Kommunikation, das von einer Basisstation, BS, (105, 1000) durchgeführt wird, wobei das Verfahren umfasst:
Empfangen (1210), von einem Benutzergerät, UE, einer Anzeige eines ersten Kontextszenarios, das mit mindestens einem von einer umliegenden Umgebung des UE oder einem Benutzerstatus assoziiert ist; und
Übertragen (1220), an das UE als Reaktion auf die Anzeige, einer ersten Konfiguration für das erste Kontextszenario, wobei das Übertragen der ersten Konfiguration mindestens eines von Folgendem umfasst: Übertragen der ersten Konfiguration, die mindestens eines von Planungsinformation, einer Referenzsignalressourcenzuweisung, einer Kanalscanoperation, einer Betriebsmodusumschaltung oder einer Einleitung einer Anwendung anzeigt; oder Übertragen, als Reaktion auf die Anzeige des ersten Kontextszenarios, einer Anzeige zum Umschalten von einer zweiten Konfiguration, die mit einem zweiten Kontextszenario assoziiert ist, auf die erste Konfiguration.

8. Verfahren nach Anspruch 7, ferner umfassend: Auswählen der ersten Konfiguration aus einem Satz von Konfigurationen, die mit einem Satz von Kontextszenarien assoziiert sind, die das erste Kontextszenario beinhalten, wobei die erste Konfiguration mit dem ersten Kontextszenario assoziiert ist;
vorzugsweise wobei der Satz von Kontextszenarien mit mindestens einem von einem Benutzerstandort, einem Benutzeraktivitätsstatus oder einem Benutzergesundheitsstatus assoziiert ist, wobei der Benutzerstandort mindestens eines von einem Zuhause, einem Büro, einem Fahrzeug, einem Transitpfad zwischen einem ersten Ort und einem zweiten Ort, einem Transportmittel oder einem öffentlichen Versammlungsort umfasst.

9. Verfahren nach Anspruch 7, ferner umfassend: Empfangen, von dem UE, eines Kontextszenarioerkennungsfähigkeitsberichts, der einen Wert beinhaltet, der anzeigt, ob Kontextszenarioerkennung unterstützt wird oder nicht.

10. Verfahren nach Anspruch 9, wobei das Empfangen des Kontextszenarioerkennungsfähigkeitsberichts Folgendes umfasst: Empfangen des Kontextszenarioerkennungsfähigkeitsberichts, der eine Kontextszenarioerkennungsebene beinhaltet, wobei die Kontextszenarioerkennungsebene mit mindestens einem von einer Sensorfähigkeit oder einer auf maschinellem Lernen basierenden Netzwerkfähigkeit assoziiert ist, wobei die auf maschinellem Lernen basierende Netzwerkfähigkeit mit mindestens einem von einer Faltungsschichtverarbeitungsfähigkeit, einer Zeitsequenzvorhersagefähigkeit oder einer Rechenfähigkeit assoziiert ist; oder
Verfahren nach Anspruch 9, ferner umfassend: Übertragen, an das UE als Reaktion auf den Kontextszenarioerkennungsfähigkeitsbericht, mindestens eines Satzes von Kontextszenarien, die das erste Kontextszenario beinhalten; und Auswählen des mindestens einen Satzes von Kontextszenarien aus einer Vielzahl von Sätzen von Kontextszenarien basierend auf dem Kontextszenarioerkennungsfähigkeitsbericht.

11. Benutzergerät, UE, (115, 900), umfassend Mittel zum Durchführen des Verfahrens nach einem der Ansprüche 1-6.

12. Basisstation, BS, (105, 1000), umfassend Mittel zum Durchführen des Verfahrens nach einem der Ansprüche 7-10.

13. Computerprogramm, umfassend Anweisungen, die bei Ausführung durch ein Benutzergerät, UE,
das Benutzergerät (900) veranlassen, das Verfahren nach einem der Ansprüche 1-6 durchzuführen, oder Anweisungen, die bei Ausführung durch eine Basisstation (1000) die Basisstation (1000) veranlassen, das Verfahren nach einem der Ansprüche 7-10 durchzuführen,

## Revendications

1. Un procédé (1100) de communication sans fil réalisé par un équipement utilisateur, UE (115, 900), le procédé comprenant :
l'obtention (1110), à partir d'un ou plusieurs capteurs, de données de capteur ;
l'identification (1120), sur la base des données de capteur, d'un premier scénario de contexte associé à un environnement environnant de l'UE ou à un statut d'utilisateur ;
la transmission (1130), à une station de base, BS, d'une indication du premier scénario de contexte ; et
la réception (1140), de la BS en réponse à l'indication, d'une première configuration pour le premier scénario de contexte, dans lequel la réception de la première configuration comprend au moins l'une parmi : la réception de la première configuration indiquant au moins un parmi des informations de planification, une attribution de ressource de signal de référence, une opération de balayage de canal, un commutateur de mode de fonctionnement, ou une initiation d'une application ; ou la réception, en réponse à l'indication du premier scénario de contexte, d'une indication de commuter d'une seconde configuration associée à un second scénario de contexte à la première configuration.

2. Le procédé selon la revendication 1, dans lequel l'identification comprend : l'identification du premier scénario de contexte parmi un ensemble de scénarios de contexte.

3. Le procédé selon la revendication 2, dans lequel l'ensemble de scénarios de contexte est associé à au moins l'un parmi un emplacement d'utilisateur, un statut d'activité d'utilisateur ou un statut de santé d'utilisateur.

4. Le procédé selon la revendication 2, dans lequel l'identification comprend en outre : l'application aux données de capteur d'un réseau basé sur un apprentissage machine, dans lequel le réseau basé sur un apprentissage machine est entraîné à identifier un scénario de contexte parmi l'ensemble de scénarios de contexte ; et l'application aux données de capteur du réseau basé sur un apprentissage machine incluant un réseau convolutif.

5. Le procédé selon la revendication 4, dans lequel les données de capteur incluent une séquence de données de capteur dans un ordre temporel, et dans lequel l'identification comprend en outre : l'application à la séquence de données de capteur du réseau basé sur un apprentissage machine incluant un réseau de prédiction de séquence temporelle.

6. Le procédé selon la revendication 1, comprenant en outre : la transmission, à la BS, d'un rapport de capacité de reconnaissance de scénario de contexte, dans lequel la transmission du rapport de capacité de reconnaissance de scénario de contexte comprend au moins l'un parmi : une valeur indiquant si la reconnaissance de scénario de contexte est prise en charge ou non ; ou un niveau de reconnaissance de scénario de contexte ;
de préférence, comprenant en outre : la détermination du niveau de reconnaissance de scénario de contexte sur la base d'au moins une parmi une capacité de capteur associée aux un ou plusieurs capteurs ou une capacité de réseau basé sur un apprentissage machine, dans lequel la capacité de réseau basé sur un apprentissage machine est associée à au moins une parmi une capacité de traitement de couche de convolution, une capacité de prédiction de séquence temporelle ou une capacité de calcul.

7. Un procédé (1200) de communication sans fil réalisé par une station de base, BS (105, 1000), le procédé comprenant :
la réception (1210), à partir d'un équipement utilisateur, UE, d'une indication d'un premier scénario de contexte associé à au moins l'un parmi un environnement environnant de l'UE ou un statut d'utilisateur ; et
la transmission (1220), à l'UE en réponse à l'indication, d'une première configuration pour le premier scénario de contexte, dans lequel la transmission de la première configuration comprend au moins l'un parmi : la transmission de la première configuration indiquant au moins un parmi des informations de planification, une attribution de ressource de signal de référence, une opération de balayage de canal, un commutateur de mode de fonctionnement, ou une initiation d'une application ; ou la transmission, en réponse à l'indication du premier scénario de contexte, d'une indication de commuter d'une seconde configuration associée à un second scénario de contexte à la première configuration.

8. Le procédé selon la revendication 7, comprenant en outre : la sélection de la première configuration parmi un ensemble de configurations associées à un ensemble de scénarios de contexte incluant le premier scénario de contexte, la première configuration étant associée au premier scénario de contexte ;
de préférence, dans lequel l'ensemble de scénarios de contexte est associé à au moins l'un parmi un emplacement d'utilisateur, un statut d'activité d'utilisateur ou un statut de santé d'utilisateur, dans lequel l'emplacement utilisateur comprend au moins l'un parmi un domicile, un bureau, un véhicule, un itinéraire de transit entre un premier lieu et un second lieu, un transport ou un lieu de rassemblement public.

9. Le procédé selon la revendication 7, comprenant en outre : la réception, à partir de l'UE, d'un rapport de capacité de reconnaissance de scénario de contexte incluant une valeur indiquant si la reconnaissance de scénario de contexte est prise en charge ou non.

10. Le procédé selon la revendication 9, dans lequel la réception du rapport de capacité de reconnaissance de scénario de contexte comprend : la réception du rapport de capacité de reconnaissance de scénario de contexte incluant un niveau de reconnaissance de scénario de contexte, dans lequel le niveau de reconnaissance de scénario de contexte est associé à au moins l'une parmi une capacité de capteur ou une capacité de réseau basée sur un apprentissage machine, dans lequel la capacité de réseau basée sur un apprentissage machine est associée à au moins l'une parmi une capacité de traitement de couche de convolution, une capacité de prédiction de séquence temporelle ou une capacité de calcul ; ou
le procédé selon la revendication 9, comprenant en outre : la transmission, à l'UE en réponse au rapport de capacité de reconnaissance de scénario de contexte, d'au moins un ensemble de scénarios de contexte incluant le premier scénario de contexte ; et la sélection de l'au moins un ensemble de scénarios de contexte parmi une pluralité d'ensembles de scénarios de contexte sur la base du rapport de capacité de reconnaissance de scénario de contexte.

11. Un équipement utilisateur, UE (115, 900), comprenant des moyens pour réaliser le procédé selon l'une des revendications 1 à 6.

12. Une station de base, BS (105, 1000), comprenant des moyens pour réaliser le procédé selon l'une des revendications 7 à 10.

13. Un programme de calculateur comprenant des instructions qui, lorsqu'elles sont exécutées par un équipement utilisateur (900), amènent l'équipement utilisateur (900) à réaliser un procédé selon l'une des revendications 1 à 6, ou des instructions qui, lorsqu'elles sont exécutées par une station de base (1000), amènent la station de base (1000) à réaliser le procédé selon l'une des revendications 7 à 10.
